# FASCICULE DE BREVET EUROPEEN

(11) **EP 2 683 069 B1**
(45) Date de publication et mention de la délivrance du brevet: **30.11.2016**
(21) Numéro de dépôt: 13173848.6
(22) Date de dépôt: 26.06.2013
(51) Int. Cl.: H02M 3/335

(54) **Système de conversion de puissance électrique modulaire à partir d'un pont asymétrique monophasé à deux interrupteurs et deux diodes de roue libre avec diodes d'isolation**
Modulares Leistungsumrichtungssystem auf Basis einer asymetrischen einphasigen Brücke mit zwei Schaltern und zwei Freilaufdioden und mit Isolationsdioden.
Modular power conversion system based on an asymmetrical single phase bridge with two switches and two freewheeling diodes and isolation diodes.

(30) Priorité: 04.07.2012 FR 1256410
(43) Date de publication de la demande: 08.01.2014
(73) Titulaire: CENTRE NATIONAL D'ETUDES SPATIALES, 75001 Paris (FR)
(72) Inventeur: Schwander, Denis, 31860 Labarthe Sur Leze (FR); Marmouget, Marc, 65150 Saint-Laurent de Neste (FR)
(74) Mandataire: Lavoix

(56) Documents cités:
- EP-A1- 0 344 067
- DE-A1- 4 017 207
- SHIGUO LUO ET AL: "A high-frequency AC distributed power system with dual PWM buses", APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, vol. 1, 9 février 2003 (2003-02-09), pages 63-68, XP010631490, DOI: 10.1109/APEC.2003.1179177 ISBN: 978-0-7803-7768-4
- TAN F D ED - INSTITUTE OF ELECTRICAL AND ELECTRONICS ENGINEERS: "The forward converter: from the classic to the contemporary", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, vol. 2, 10 mars 2002 (2002-03-10), pages 857-863, XP010583018, DOI: 10.1109/APEC.2002.989344 ISBN: 978-0-7803-7404-1
- SALAZAR L ET AL: "A high frequency forward DC/DC converter topology with transformer flux balancing capability", 19881002; 19881002 - 19881007, 2 octobre 1988 (1988-10-02), pages 785-792, XP010519174,

## Description

L'invention proposée se situe dans le domaine du conditionnement de puissance électrique et en particulier des systèmes de conversion de puissance électrique modulaire.

L'objectif de cette invention est de réaliser un système de conversion de puissance électrique modulaire à partir d'un pont asymétrique monophasé à deux interrupteurs (en anglais forward dual switches bridge) et de moyens redresseurs avec ou sans post régulation directe (en anglais forward post regulation), associés chacun à un transformateur.

Classiquement, il est connu de mettre en oeuvre une distribution de puissance électrique par des modules séparés intégrant le même transformateur lorsque ce transformateur est branché sur une source d'alimentation alternative symétrique.

De même, la distribution de puissance par des modules, pourvus de post régulateurs de type dissipatif ou de type magnétique et intégrant un même transformateur, est classiquement connu lorsque le transformateur est branché sur un onduleur à pont symétrique, alimenté par une source à tension et courant continus, et fonctionnant comme une source alternative.

L'association, au travers d'un même transformateur, d'une structure de pont asymétrique à deux interrupteurs commandés en rapport cyclique fixe ou régulée à une distribution modulaire de modules ayant des post régulateurs de type direct (forward) à régulation magnétique est déjà moins connu mais très bien décrite dans l'article de Shiguo Luo, intitulé « A High-Frequency AC Distributed Power System with Dual PWM Buses » et tiré de la revue IEEE Transactions on Power Electronics 2003.

Cette association présente par rapport aux structures symétriques classiques une simplification des étages redresseurs et des étages de régulation, ce qui rend ce système de conversion de puissance électrique modulaire attrayant pour de très faibles puissances.

Il est tentant d'étendre cette dernière architecture ou ce dernier concept à une distribution de puissance par des modules, incluant ou non des post régulateurs de type magnétique ou dissipatif, alimentés par un pont asymétrique à deux interrupteurs asymétrique et intégrant chacun un transformateur différent, la mise en parallèle des transformateurs étant simplement réalisée du côté du pont asymétrique aux travers des enroulements primaires des transformateurs.

Toutefois, cette architecture, non proposée à ce jour, de système de conversion de puissance électrique modulaire conduit à des pertes d'énergie électrique très importantes, des saturations de transformateurs inacceptables dès que les régimes de courant sont déséquilibrés entre les différentes sorties des modules. Ces problèmes font perdre même tout l'intérêt de ce concept dans cette mise en oeuvre trop simple.

Il est à remarquer que ces problèmes sont inexistants lorsqu'un seul transformateur est centralisé sur le pont asymétrique et dans le cas de structures symétriques équilibrées alimentées par un pont symétrique.

Le problème technique est donc d'éviter, pour des systèmes de conversion de puissance électrique modulaires ayant un pont asymétrique à deux interrupteurs alimentés par une source de tension et courant continus, et ayant un transformateur différent pour chaque module de sortie, des pertes d'énergie électriques importantes causées par les saturations des transformateurs dès que les régimes de courant sont déséquilibrés entre les différentes sorties.

Un problème connexe est d'éviter au maximum la dégradation du rendement de distribution de puissance par module de sortie, ces derniers étant pourvus le cas échéant de post régulateurs magnétiques ou dissipatifs du type direct.

A cet effet, l'invention a pour objet un système de conversion continu/continu d'énergie électrique modulaire à plusieurs modules, destiné à convertir de l'énergie électrique, fournie par une source d'alimentation en énergie électrique délivrant une première tension différentielle d'entrée continue et un premier courant d'entrée continu, en de l'énergie électrique délivrée en sortie d'au moins deux modules de conversion redresseurs différents,
le système de conversion comprenant
une première borne d'alimentation et une deuxième borne d'alimentation, configurées pour être connectées à la source d'alimentation et recevoir respectivement une première tension d'alimentation Vc1 et une deuxième tension d'alimentation Vc2 continues, la première tension d'alimentation Vc1 étant supérieure à la deuxième tension d'alimentation Vc2,
un convertisseur primaire monophasé, ayant une structure de pont asymétrique commandée en rapport cyclique fixe ou régulée, comprenant une première branche de pont et une deuxième branche de pont, branchées chacune entre la première et la deuxième bornes d'alimentation,
la première branche de pont étant formée d'un premier interrupteur électronique commandé par un premier moyen de commande, et d'une première diode de roue libre et de démagnétisation, la première diode de roue libre étant connectée en série au premier interrupteur électronique en une première borne intermédiaire et à la deuxième borne d'alimentation,
la deuxième branche de pont étant formée d'un deuxième interrupteur électronique commandé par un deuxième moyen de commande, et d'une deuxième diode de roue libre et de démagnétisation, la deuxième diode de roue libre étant connectée au deuxième interrupteur électronique en une deuxième borne intermédiaire et à la première borne d'alimentation,
les premier et deuxième moyens de commande étant configurés pour commander par des impulsions répétées périodiquement, en conduction et en même temps, le premier interrupteur et le deuxième interrupteur, la tension délivrée Ve1 à la première borne intermédiaire étant supérieure à la tension délivrée Ve2 à la deuxième borne intermédiaire lorsque les premier et deuxième interrupteurs sont en conduction simultanée,
au moins deux modules de conversion redresseurs, connectés en entrée entre les première et deuxième bornes intermédiaires du convertisseur primaire monophasé,
chacun des au moins deux modules de conversion comportant
un transformateur différent ayant un unique enroulement primaire branché entre les première et deuxième bornes intermédiaires du convertisseur primaire monophasé, et au moins un enroulement secondaire de charge utile, et,
associées de manière propre à chaque enroulement secondaire, un redresseur monophasé différent, une cellule de filtrage d'ondulations résiduelles différente, une paire distincte de bornes de sortie d'extrémité modulaire, le transformateur, le redresseur monophasé, la cellule de filtrage étant configurés pour convertir l'énergie électrique fournie en sortie du convertisseur primaire monophasé en de l'énergie électrique délivrée sur la paire de bornes de sortie d'extrémité modulaire, sous une tension différentielle de sortie modulaire prédéterminé pour un courant de charge de sortie modulaire prédéterminé,
caractérisé en ce que
chaque enroulement primaire différent et unique, associé à un module de conversion différent, comprend une première borne et une deuxième borne d'enroulement primaire, connectées électriquement respectivement à la première borne intermédiaire et à la deuxième borne intermédiaire du convertisseur primaire, et
parmi le nombre total N de modules de conversion alimentés par le convertisseur primaire, chacun d'au moins le nombre total N moins un des modules de conversion comprend respectivement
une première diode d'isolation de magnétisation connectée directement ou au travers d'une liaison filaire en série avec l'enroulement primaire associé en l'une de ses première et deuxième bornes pour former un circuit série branché entre la première borne intermédiaire et la deuxième borne intermédiaire, et polarisée dans le sens de conduction vers la deuxième borne intermédiaire, et
une deuxième diode d'isolation de démagnétisation connectée, soit sur l'enroulement primaire du transformateur associé, soit sur un enroulement secondaire du transformateur associé pris parmi l'au moins un enroulement de charge utile ou un enroulement secondaire supplémentaire dédié uniquement à la démagnétisation.

Suivant des modes particuliers de réalisation, le système de conversion continu/continu d'énergie électrique modulaire comporte une ou plusieurs des caractéristiques suivantes :
- tous les modules de conversion comprennent chacun une première diode d'isolation de magnétisation différente et une deuxième diode d'isolation différente ;
- le convertisseur primaire monophasé est dépourvu de la deuxième diode de roue libre et de démagnétisation lorsque l'inductance de fuite, présentée par le câblage, ou plus généralement la connectique reliant l'ensemble des transformateurs et le convertisseur primaire, est suffisamment faible pour renvoyer sur les interrupteurs une énergie de démagnétisation compatible des capacités d'absorption et de dissipation de cette énergie par les interrupteurs ;
- un unique module de conversion parmi le nombre total N de modules de conversion alimentés par le convertisseur primaire est dépourvu d'une première diode d'isolation de magnétisation et d'une deuxième diode d'isolation de démagnétisation, ledit module de conversion étant destiné à supporter la plus grande charge du système de conversion en terme d'énergie électrique consommée ;
- lorsqu'une première diode d'isolation de magnétisation est connectée sur l'enroulement primaire d'un transformateur associé, la diode d'isolation de démagnétisation est connectée directement ou au travers d'un fil entre, soit la première borne d'alimentation si la diode d'isolation de magnétisation est connectée à la deuxième borne intermédiaire, soit la deuxième borne d'alimentation si la diode d'isolation de magnétisation est connectée à la première borne intermédiaire, et la borne de l'enroulement primaire connectée à la diode d'isolation de magnétisation ;
- chaque module de conversion comprend respectivement un câble différent de liaison torsadée bifilaire blindée ayant un premier fil et un deuxième fil connectés respectivement à une extrémité différente de l'enroulement primaire du module de conversion,
lorsque le module de conversion est dépourvu de diode d'isolation de magnétisation et de diode d'isolation de démagnétisation, les premier et deuxième fils sont connectés directement respectivement à une borne intermédiaire différente du convertisseur primaire,
lorsque le module de conversion comprend une première diode d'isolation de magnétisation et une deuxième diode d'isolation de démagnétisation,
la première diode d'isolation de magnétisation est connectée à l'une des première et deuxième borne intermédiaires du convertisseur primaire et l'un des fils relie la première diode d'isolation de magnétisation à une extrémité de l'enroulement primaire, et
la deuxième diode d'isolation de démagnétisation est connectée, soit à la première borne d'alimentation lorsque la première diode d'isolation de magnétisation est connectée à la deuxième borne intermédiaire, soit à la deuxième borne d'alimentation lorsque la première diode d'isolation de magnétisation est connectée à la première borne intermédiaire, et l'un des fils relie la deuxième diode d'isolation de démagnétisation à une extrémité de l'enroulement primaire,
et chaque borne intermédiaire du convertisseur primaire est connectée, pour chaque module de conversion, directement ou au travers d'une première diode d'isolation, à un fil différent du câble du module de conversion ;
- chaque module de conversion comprend respectivement un câble différent,
lorsque tous les modules de conversion comportent chacun une première diode de magnétisation et une deuxième diode de démagnétisation, chaque câble est formé par une liaison torsadée trifilaire blindée à trois fils,
lorsqu'un seul des modules de conversion est dépourvu d'une diode d'isolation de démagnétisation et les modules de conversion restants comportent chacun une première diode d'isolation de magnétisation et une deuxième diode d'isolation de démagnétisation, un seul câble est formé par une liaison bifilaire blindé et les câbles restants sont formés chacun par une liaison torsadée trifilaire blindée,
chaque câble bifilaire et trifilaire ayant un premier fil et une deuxième fil connectés chacun à une borne intermédiaire différente du convertisseur primaire, et
chaque câble trifilaire ayant une troisième fil connecté directement à la première borne d'alimentation,
les premier et deuxième fils de chaque câble bifilaire ou trifilaire sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du module de conversion et l'autre fil étant connecté directement à l'extrémité restante de l'enroulement primaire lorsque le câble est trifilaire, les premier et deuxième étant connectés chacun à une extrémité différente de l'enroulement primaire du module de conversion lorsque le câble est bifilaire,
le troisième fil de chaque câble trifilaire étant connecté à une deuxième diode de démagnétisation du module de conversion correspondant, la deuxième diode de démagnétisation et le troisième fil étant connectés en série à l'une des bornes de l'enroulement primaire du transformateur correspondant ;
- chaque module de conversion comprend respectivement un câble différent,
lorsque tous les modules de conversion comportent chacun une première diode de magnétisation et une deuxième diode de démagnétisation, chaque câble est formé par une liaison quadrifilaire ayant une paire torsadée formée d'un premier fil et d'un deuxième, un troisième fil, un quatrième fil, une capacité de filtrage auxiliaire, une diode auxiliaire d'isolation,
lorsqu'un seul des modules de conversion est dépourvu d'une diode d'isolation de démagnétisation et les modules de conversion restants comportent chacun une première diode d'isolation de magnétisation et une deuxième diode d'isolation de démagnétisation, un seul câble est formé par une liaison bifilaire blindé ayant un premier fil et une deuxième fil, et les câbles restants sont formés chacun par une liaison quadrifilaire du même type que celle utilisée lorsque tous les modules de conversion comportent chacun une première diode de magnétisation et une deuxième diode de démagnétisation,
lorsque le câble est bifilaire, les premier et deuxième fils sont connectés vers le convertisseur primaire à une borne intermédiaire différente et sont connectés chacun à une extrémité différente de l'enroulement primaire du module de conversion,
lorsque le câble est quadrifilaire
le premier fil et le deuxième fil sont connectés chacun vers le convertisseur primaire à une borne intermédiaire différente, et sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du modulé de conversion et l'autre fil étant connecté directement à l'extrémité restante de l'enroulement primaire,
le troisième fil de chaque câble quadrifilaire est connecté vers le module de conversion à la deuxième diode de démagnétisation, et connecté directement à la première borne d'alimentation,
le quatrième fil est connecté vers le module de conversion directement à la deuxième borne d'alimentation, et est connecté au travers de la diode auxiliaire à l'extrémité de l'enroulement primaire qui est connectée à la première bore intermédiaire,
la capacité auxiliaire est branchée entre les troisième et quatrième fils ;
- lorsqu'une deuxième diode d'isolation de démagnétisation est connectée soit sur un enroulement secondaire du transformateur associé pris parmi l'au moins un enroulement de charge utile ou un enroulement secondaire supplémentaire dédié uniquement à la démagnétisation d'un transformateur associé, la diode d'isolation de démagnétisation est connectée en série avec un circuit de dissipation et/ou récupération, le circuit de dissipation et/ou récupération étant compris dans l'ensemble formé par une association en série d'une diode zener et d'une résistance, et une association en parallèle d'une capacité sur un circuit série composé d'une diode zéner et d'une résistance ;
- chaque interrupteur électronique est compris dans l'ensemble formé par les transistors bipolaires, les transistors de la technologie MOS, les transistor de type IGBT et les thyristors de type GTO ;
- sur chacune d'une ou plusieurs premières diodes d'isolation de magnétisation est branché en parallèle et en propre un élément d'écrêtage associé, l'élément d'écrêtage étant compris dans l'ensemble formé par une ou plusieurs diodes associés en série dans le même sens et branchées en parallèle de la première diode d'isolation en polarisation inverse, l'association tête bêche en un circuit série d'une diode zener et d'une diode, le circuit série étant branchée en parallèle de la première diode d'isolation, et une capacité ;
- au moins un module de conversion redresseur comprend un régulateur direct de sortie d'une de ses tensions différentielles de sortie, le régulateur de sortie étant compris dans l'ensemble formé par les régulateurs de type ballast et les régulateurs magnétiques ;
- le convertisseur primaire monophasé a une structure de pont asymétrique commandée ne rapport cyclique régulée et comprend un générateur de signal de commande destiné à fournir un signal de commande aux interrupteurs,
le générateur de signal de commande comporte une borne de sortie de commande pour délivrer un signal de commande de sortie, et une borne de réception d'une tension image représentative, soit de la différence entre la première tension d'alimentation et la deuxième tension d'alimentation, soit une tension différentielle fournie entre une première borne de sortie et une deuxième borne de sortie d'un module de conversion destiné à fournir l'énergie électrique de sortie la plus grande parmi les énergies électriques de sortie de tous les modules de conversion, et
le signal de commande fourni par le générateur en sa borne de sortie de commande est un signal séquentiel à impulsions modulées en largeur, la modulation de la largeur dépendant de la tension image reçue à la borne de réception.

L'invention sera mieux comprise et d'autres avantages de celle-ci apparaîtront plus clairement à la lecture de la description qui va suivre de plusieurs formes de réalisation de l'invention, donnée uniquement à titre d'exemple et faite en se référant aux dessins annexés dans lesquels :

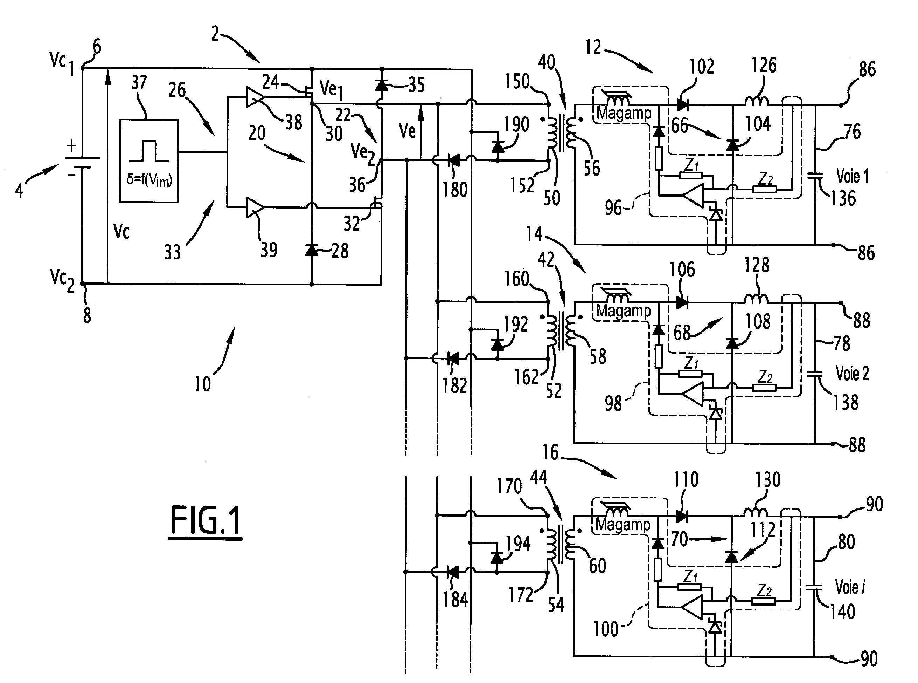

- la Figure 1 est une représentation sous la forme d'un schéma électrique d'un premier mode de réalisation d'un système de conversion d'énergie électrique modulaire selon l'invention, c'est-à-dire un système dans lequel les modules de conversion redresseurs de sortie comprennent chacun un transformateur différent et sont pourvus de diodes d'isolation, les transformateurs étant alimentés à partir d'un pont asymétrique à deux interrupteurs ;

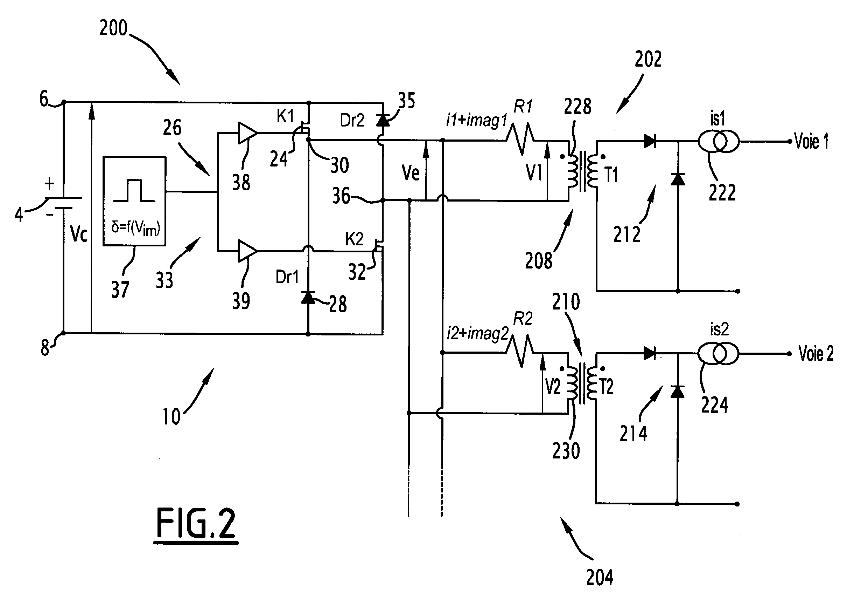

- la Figure 2 est un schéma électrique de simulation simplifiée d'un système de conversion d'énergie électrique modulaire dépourvu de diodes d'isolation dans lequel deux modules redresseurs de sortie comprennent chacun un transformateur différent, les transformateurs étant alimentés à partir d'un pont asymétrique à deux interrupteurs ;

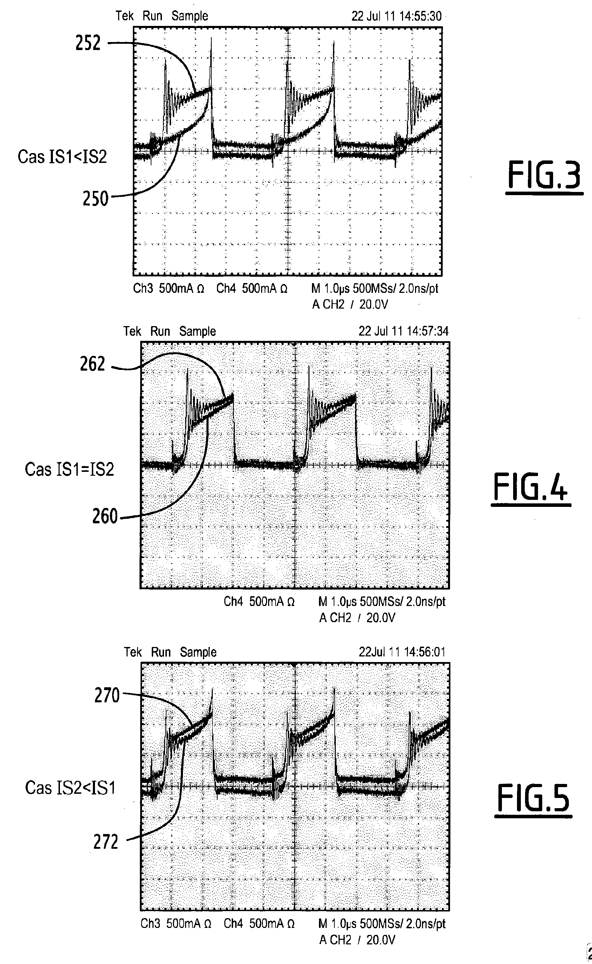

- les Figures 3, 4 et 5 sont des représentations de l'évolution temporelle des intensités de courants électriques respectifs traversant les enroulements primaires des deux transformateurs représentés sur la Figure 2, pour différentes configurations de régimes de courant, le courant de charge du premier transformateur étant strictement inférieur au courant de charge du deuxième transformateur dans le cas de la Figure 3, les courants de charge des deux transformateurs étant égaux dans le cas de la Figure 4, le courant de charge du deuxième transformateur étant strictement inférieur au courant de charge du premier transformateur dans le cas de la Figure 5 ;

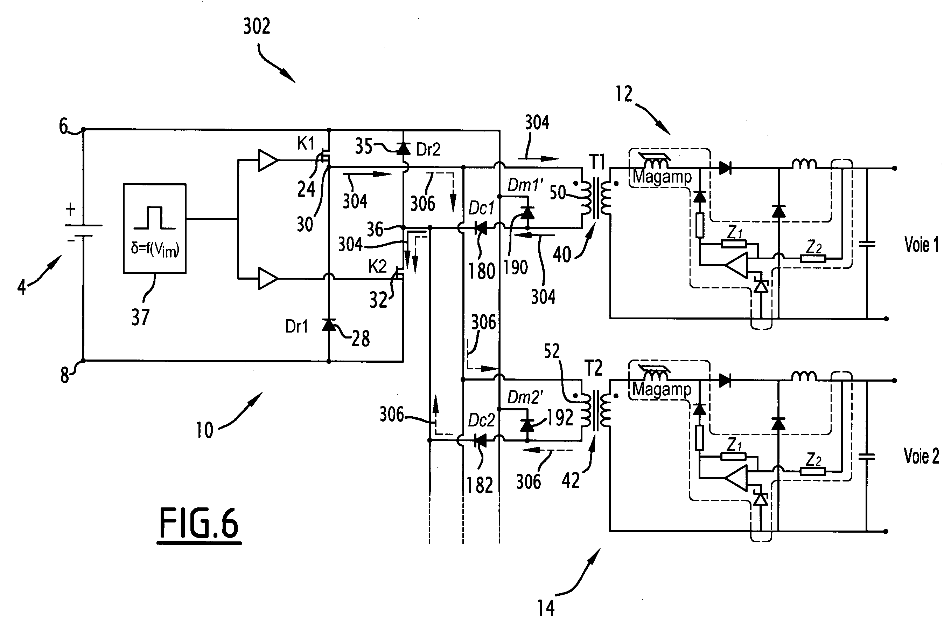

- la Figure 6 est un schéma électrique simplifié à deux modules de conversion du premier mode de réalisation décrit à la Figure 1, dans lequel sont mis en évidence les sens de circulation des courants électriques traversant les enroulements primaires des transformateurs lors des phases de magnétisation des transformateurs ;

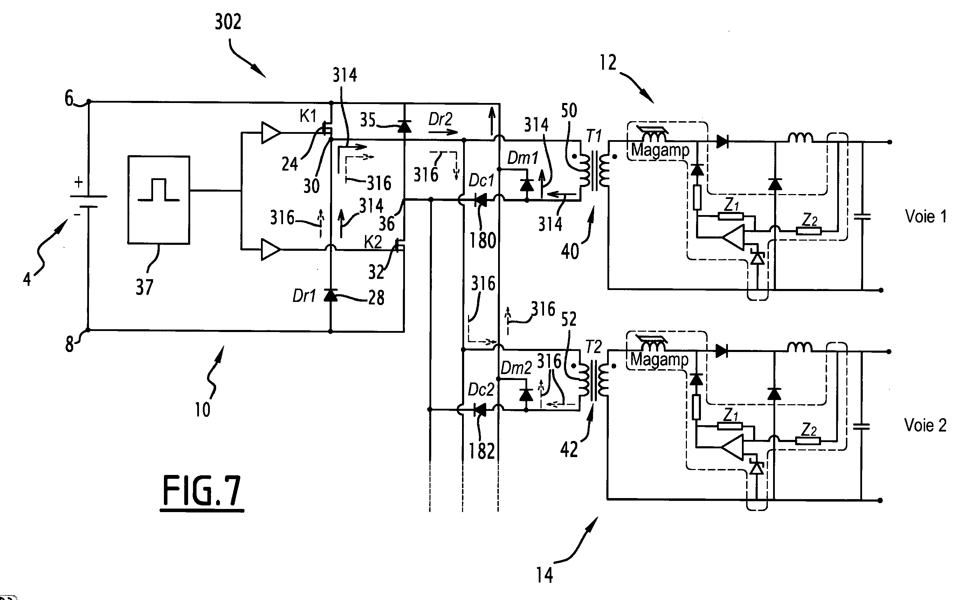

- la Figure 7 est un schéma électrique simplifié à deux modules de conversion du premier mode de réalisation de la Figure 1, analogue à celui de la Figure 6, dans lequel sont mis en évidence les sens de circulation des courants électriques traversant les enroulements primaires des transformateurs lors des phases de démagnétisation des transformateurs ;

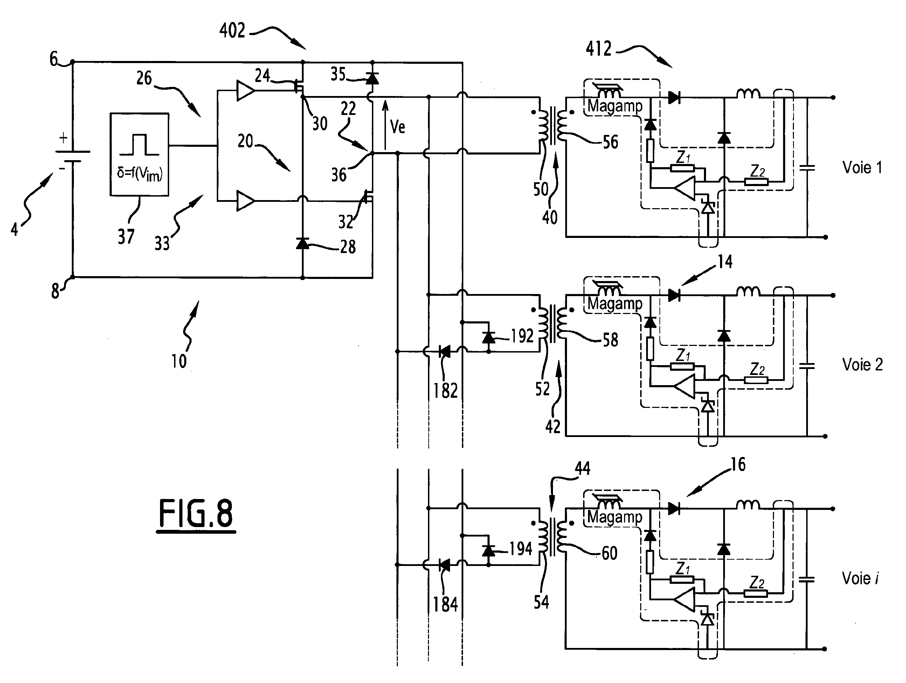

- la Figure 8 est une représentation sous la forme d'un schéma électrique d'un deuxième mode de réalisation d'un système de conversion d'énergie électrique modulaire selon l'invention, dans lequel l'un des enroulements primaires des transformateurs est dépourvu de diodes d'isolation de magnétisation propres et de diodes de démagnétisation propres, à l'inverse du reste des enroulements primaires des transformateurs qui en sont pourvus ;

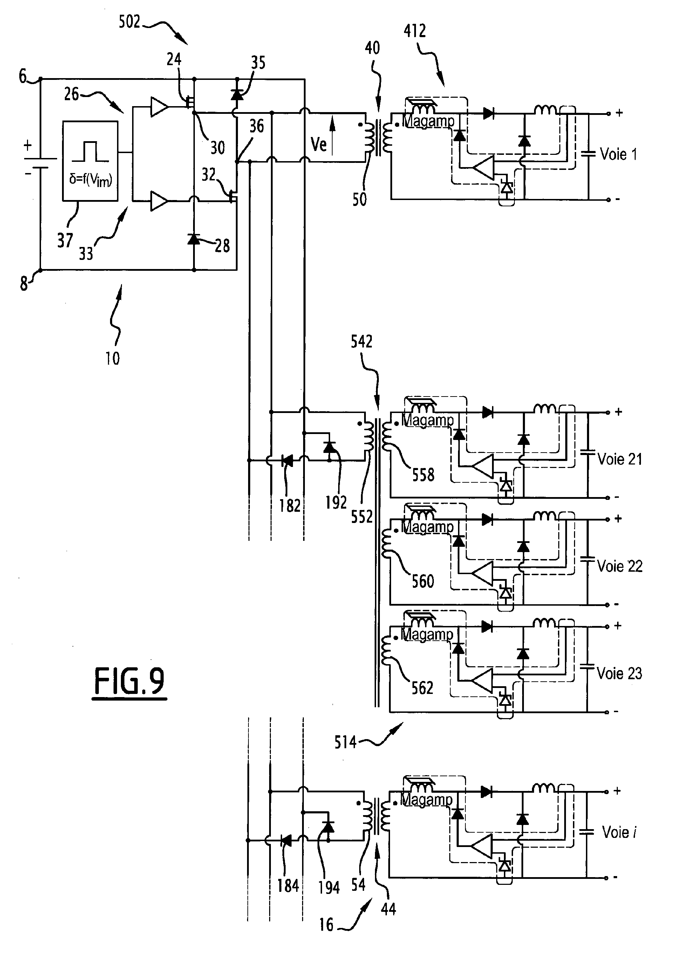

- la Figure 9 est un schéma électrique d'une troisième forme de réalisation d'un système de conversion d'énergie électrique, dérivée de la deuxième forme de réalisation de la Figure 8, dans laquelle l'un des modules de conversion redresseur délivre plusieurs tensions différentielles de sortie;

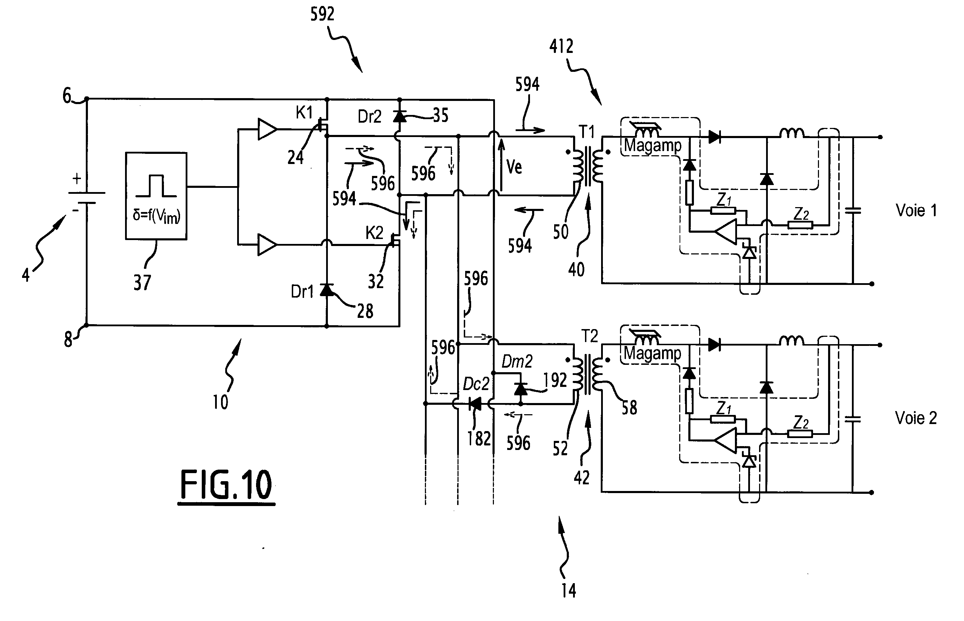

- la Figure 10 est un schéma électrique simplifié des deuxième et troisième modes de réalisation des Figures 8 et 9, réduit au module unique de conversion dépourvu de diodes d'isolation de magnétisation et de diodes d'isolation de démagnétisation, et réduit à un module de conversion pourvu d'une diode d'isolation de magnétisation et d'une diode d'isolation de démagnétisation, dans lequel sont mis en évidence les sens de circulation des courants électriques traversant les enroulements primaires des transformateurs lors des phases de magnétisation des transformateurs ;

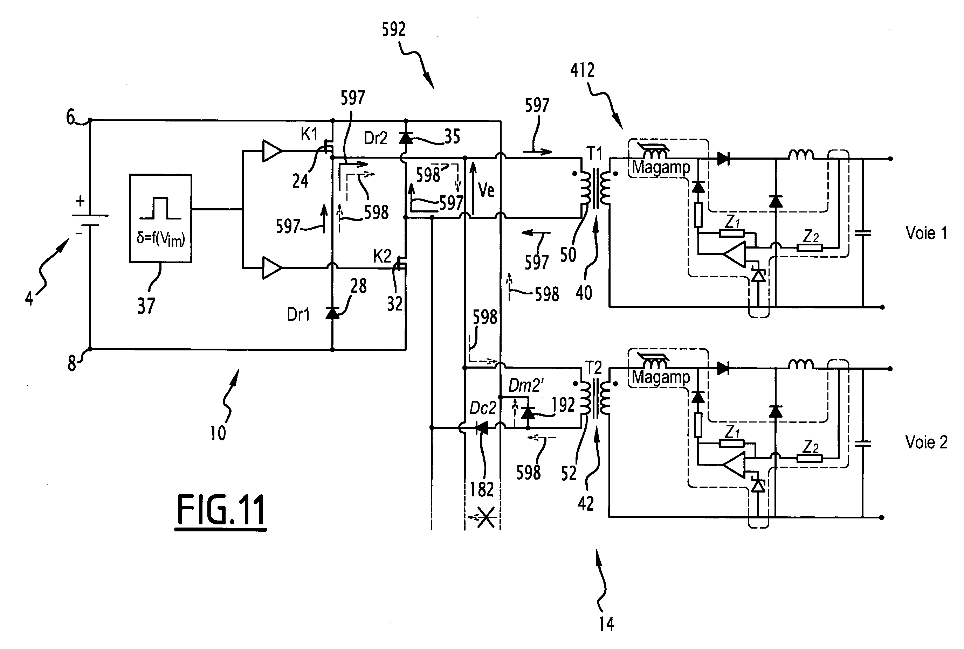

- la Figure 11 est un schéma électrique simplifié des deuxième et troisième formes de réalisation des Figures 8 et 9, identique à celui de la Figure 10, dans lequel sont mis en évidence les sens de circulation des courants traversant les enroulements primaires des transformateurs lors des phases de démagnétisation des transformateurs ;

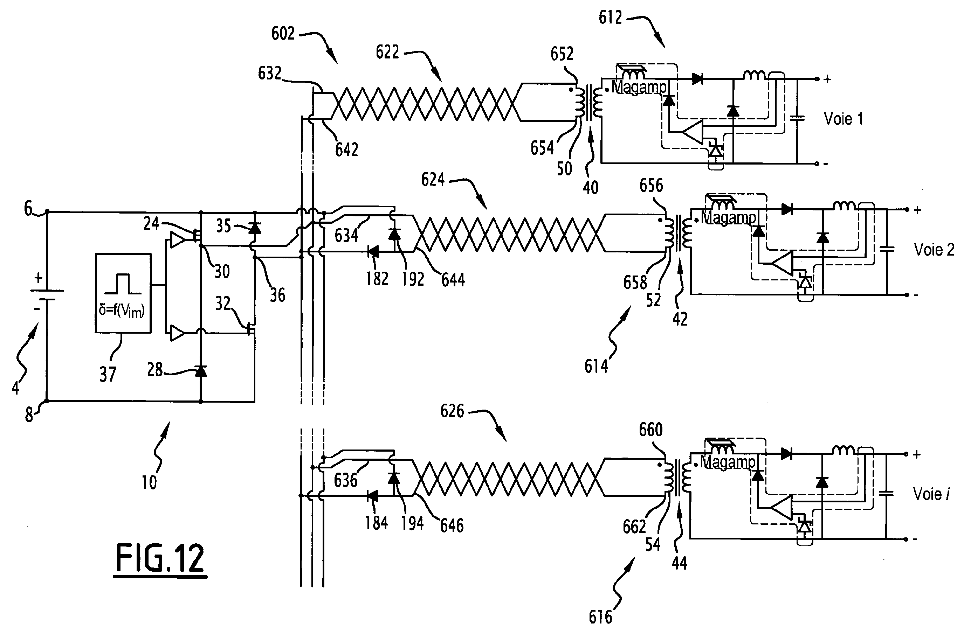

- la Figure 12 est une quatrième forme de réalisation, en tant que variante de la deuxième forme de réalisation de la Figure 8, dans laquelle les modules de conversion redresseurs sont déportés du convertisseur primaire monophasé au travers de câbles de liaison bifilaires respectifs, et dans laquelle les diodes d'isolation de magnétisation de modules de conversion qui en sont pourvus sont disposées du côté du convertisseur primaire monophasé ;

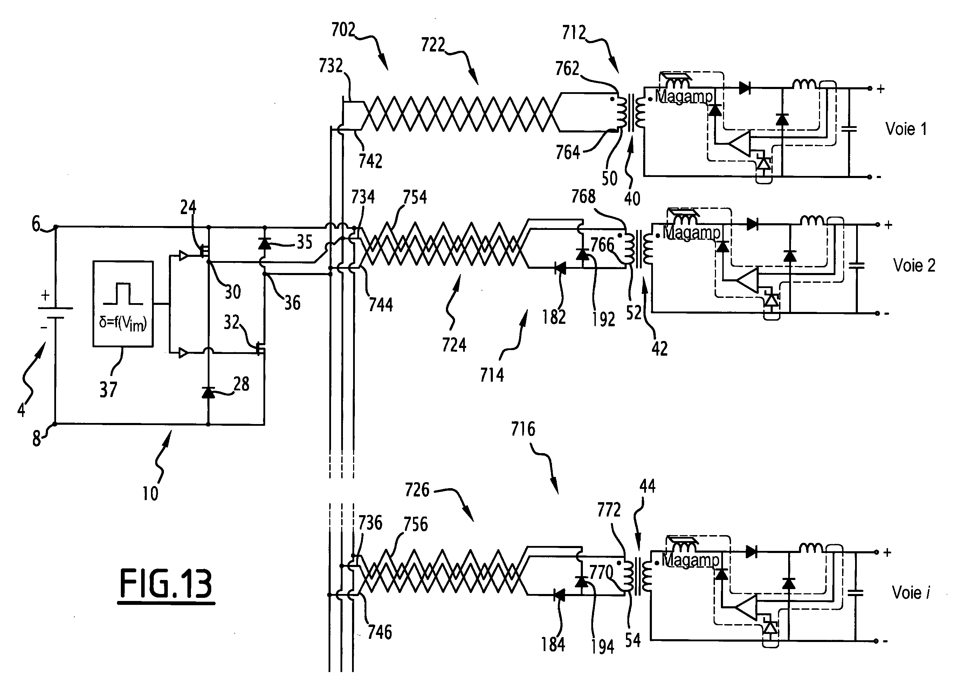

- la Figure 13 est une cinquième forme de réalisation, en tant que variante de la quatrième forme de réalisation de la Figure 12, dans laquelle les diodes d'isolation de magnétisation et les diodes d'isolation de démagnétisation des modules de conversion redresseurs qui en sont pourvus sont disposées du côté des modules de conversion et sont reliées au convertisseur primaire au travers de câbles de liaison trifilaire torsadée ;

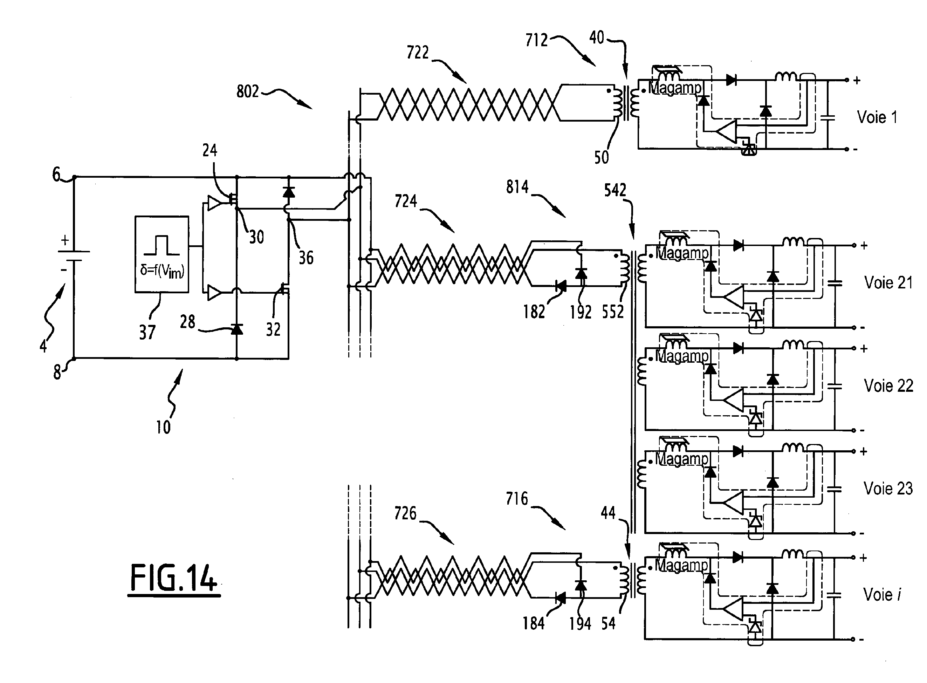

- la Figure 14 est une sixième forme de réalisation, en tant que variante de la cinquième forme de réalisation de la Figure 13, dans laquelle l'un des modules de conversion redresseur délivre plusieurs tensions différentielles de sortie;

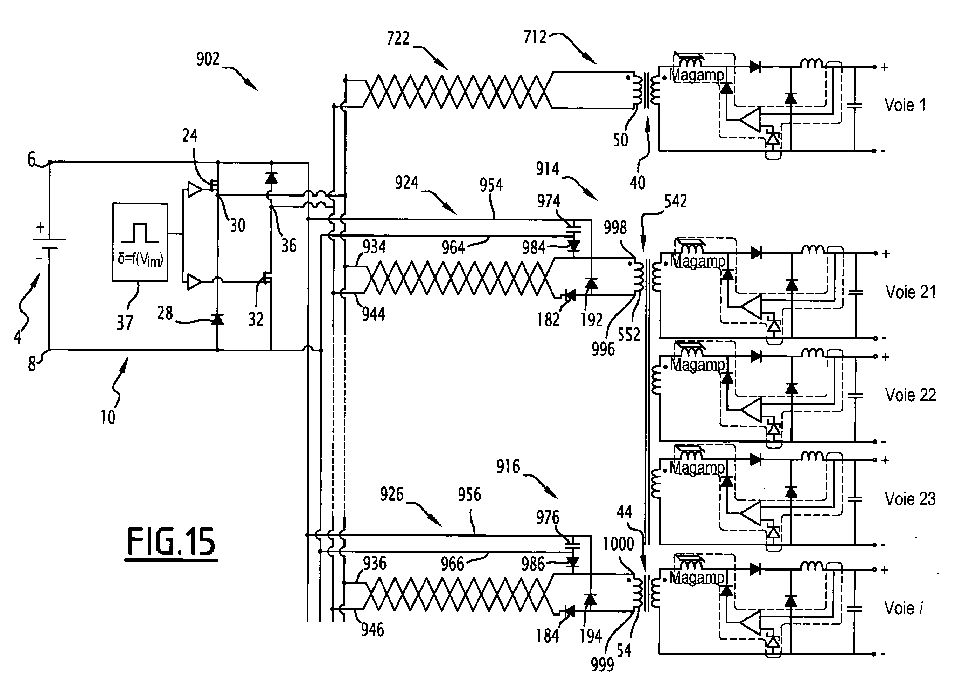

- la Figure 15 est une septième forme de réalisation, en tant que variante de la sixième forme de réalisation de la Figure 14, dans laquelle les diodes d'isolation de magnétisation et les diodes d'isolation de démagnétisation des modules de conversion redresseurs qui en sont pourvus sont disposées du côté des modules de conversion et sont reliées au travers de câbles de liaison quadrifilaire à deux fils torsadés ;

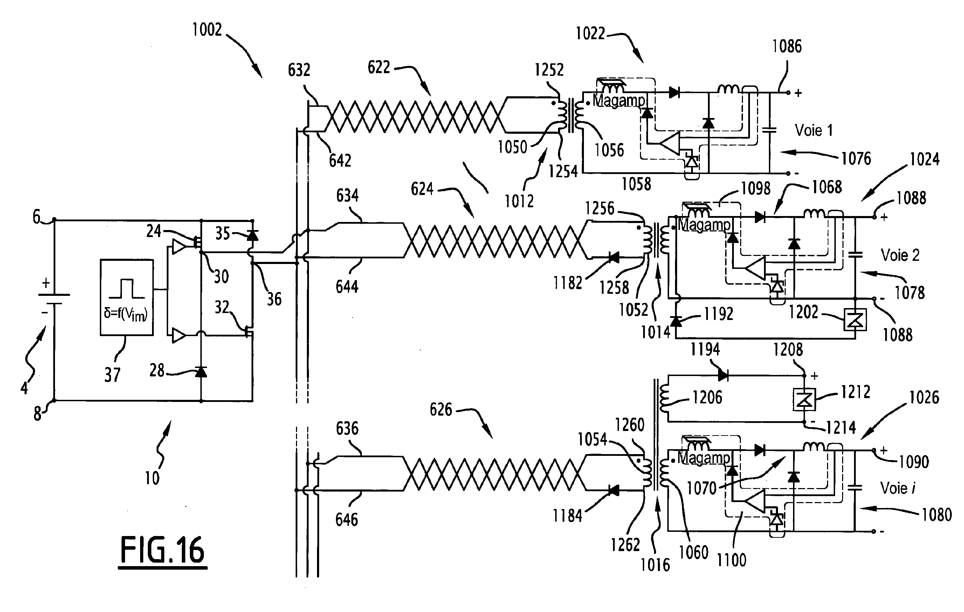

- la Figure 16 est une huitième forme de réalisation dans laquelle les diodes d'isolation de démagnétisation sont disposées du coté des secondaires des transformateurs des module de conversion ;

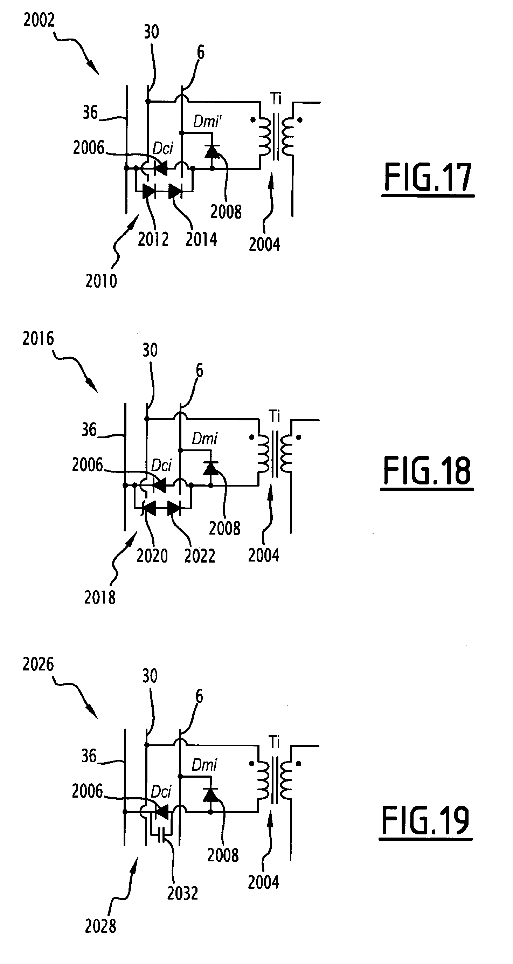

- les Figures 17, 18 et 19 sont des variantes de remplacement d'une diode d'isolation de magnétisation, par une mise en parallèle d'une diode d'isolation de magnétisation avec soit une série de diodes de même polarité selon la Figure 16, soit un circuit série formé par une diode zéner et une autre diode selon la figure 17, soit une capacité selon la Figure 18.

Suivant la Figure 1, un système de conversion continu/continu d'énergie électrique modulaire 2 est connecté en entrée à une source d'alimentation 4 délivrant une tension différentielle Vc continue et un courant continu, par exemple une batterie.

Le système de conversion continu/continu et de distribution d'énergie électrique modulaire 2 est configuré pour convertir l'énergie électrique, fournie par la source d'alimentation 4 en de l'énergie électrique sous des tensions continues délivrées en sortie d'au moins deux modules de conversion redresseurs différents.

Le système de conversion continu/continu d'énergie électrique modulaire 2 comprend une première borne d'alimentation 6 et une deuxième borne d'alimentation 8, un convertisseur primaire monophasé 10, et au moins deux modules de conversion, redresseurs, trois modules de conversion 12, 14, 16 étant seulement représentés sur la Figure 1.

La première borne d'alimentation 6 et la deuxième borne d'alimentation 8 sont configurées pour être connectées à la source d'alimentation 4 et recevoir respectivement une première tension d'alimentation continue Vc1 et une deuxième tension d'alimentation continue Vc2, la première tension d'alimentation Vc1 de la première borne 6 étant supérieure à la deuxième tension d'alimentation Vc2 de la deuxième borne 8.

Le convertisseur primaire monophasé 10 possède une structure de pont asymétrique à deux interrupteurs électroniques, commandés en rapport cyclique fixe ou régulé, et comprend une première branche 20 de pont et une deuxième branche 22 de pont, branchées chacune entre la première borne d'alimentation 6 et la deuxième borne 8 d'alimentation.

La première branche de pont 20 est formée d'un premier interrupteur électronique 24 commandé par un premier moyen de commande 26 et d'une première diode 28 de roue libre et de démagnétisation, connectée en série au premier interrupteur électronique 24 en une première borne intermédiaire 30 et connectée à la deuxième borne d'alimentation 8.

La deuxième branche 22 de pont est formée d'un deuxième interrupteur électronique 32, commandé par un deuxième moyen de commande 33, et d'une deuxième diode 35 de roue libre et de démagnétisation, connectée en série au deuxième interrupteur électronique 32 à une deuxième borne intermédiaire 36 et connectée à la première borne d'alimentation 6.

Les premier et deuxième moyens de commande 26, 33 sont configurés pour commander de manière périodique, en conduction et en même temps, les premier et deuxième interrupteurs électroniques 24, 32, la tension Ve1 délivrée à la première borne intermédiaire 30 étant supérieure à la tension Ve2 délivrée à la deuxième borne intermédiaire 36 lorsque les premier et deuxième interrupteurs 24, 32 sont en conduction simultanée.

Le premier moyen de commande 26, respectivement le deuxième moyen de commande 33 comprennent chacun un même générateur de signal de commande 37 à faible puissance mis en commun, suivi d'un premier amplificateur de commande 38, respectivement d'un deuxième amplificateur de commande 39.

Les modules de conversion, redresseurs, 12, 14, 16 sont connectés entre les première et deuxième bornes intermédiaires 30 , 36 du convertisseur primaire monophasé 10.

Chacun des trois modules de conversion 12 14, 16 comprend un transformateur différent 40, 42, 44.

Chaque transformateur 40, 42, 44 possède un unique enroulement primaire 50, 52, 54 différent, branché respectivement entre les première et deuxième bornes intermédiaires 30, 36 du convertisseur primaire monophasé 10, et possède un unique enroulement secondaire 56, 58, 60.

Chacun des trois modules de conversion 12, 14, 16 comprend, associé à l'enroulement secondaire correspondant 56, 58, 60, un redresseur monophasé différent 66, 68, 70, une cellule différente 76, 78, 80 de filtrage passe-bas des ondulations résiduelles, une paire distincte 86, 88, 90 de bornes de sorties d'extrémité modulaire, un régulateur direct de sortie 96, 98, 100 différent de régulation d'une tension différentielle de sortie différente.

Chaque redresseur monophasé 66, 68, 70 est un circuit quadripôle, formé respectivement de deux diodes 102, 104; 106, 108; 110, 112 disposées selon une topologie en L, et branché à la sortie de l'enroulement secondaire correspondant 56 , 58, 60.

Chaque cellule de filtrage 76, 78, 80 est un circuit quadripôle classique de type LC, formé respectivement d'une inductance 126, 128, 130 montée en série et d'une capacité 136, 138, 140 montée en parallèle, et branchée en sortie du redresseur monophasé correspondant 66, 68, 70.

Chaque régulateur direct de sortie, 96, 98, 100 est compris dans l'ensemble formé par les régulateurs de type ballast et les régulateurs magnétiques.

Les régulateurs de type Ballast sont branchés en aval des diodes de redressement tandis que la bobine de régulation post magnétique est branchée directement en sortie du transformateur.

Sur la Figure 1, les régulateurs directs de sortie 96, 98, 100 sont des post régulateurs magnétiques, inscrits sur la Figure 1 dans des zones délimitées par des contours en traits interrompus, et décrits par exemple dans le document intitulé « Bulletin SR-4 » et publié dans le bulletin technique de Magnetics Butler PA3.

Les enroulements primaires et secondaires 50, 52, 54, 56, 58, 60 des transformateurs 40, 42, 44, les redresseurs 66, 68, 70, les cellules de filtrage 76, 78, 80, les régulateurs de sortie 96, 98, 100 sont configurés pour convertir l'énergie électrique fournie en sortie 30, 36 du convertisseur primaire monophasé 10 en de l'énergie électrique délivrée sur les paires 86, 88, 90 de bornes de sorties d'extrémités modulaires selon des tensions différentielles de sortie modulaire correspondantes prédéterminées pour des courants de charge respectifs de sortie modulaire prédéterminés.

En variante, un ou plusieurs modules de conversion sont dépourvus de régulateurs directs de sortie.

Chaque enroulement primaire 50, 52, 54, différent et unique, associé à un module de conversion différent 12, 14, 16, comprend respectivement une première borne 150, 160, 170 et une deuxième borne 152, 162, 172 d'enroulement primaire, connectées respectivement à la première borne intermédiaire 30 et à la deuxième borne intermédiaire 36 du convertisseur primaire monophasé 10.

Sur la Figure 1, chacun des modules de conversion 12, 14, 16 comprend respectivement une première diode d'isolation de magnétisation 180, 182, 184, connectée directement ou au travers d'une liaison filaire entre la deuxième borne 152, 162, 172 de l'enroulement primaire correspondant 50, 52, 54 et la deuxième borne intermédiaire 36 pour former avec l'enroulement primaire 50, 52, 54 un circuit série branché entre la première borne intermédiaire 30 et la deuxième borne intermédiaire 36, et polarisé dans le sens de la conduction vers la deuxième borne intermédiaire 36.

Chacun des modules de conversion 12, 14, 16 comprend respectivement une deuxième diode d'isolation de démagnétisation 190, 192, 194, connectée directement ou au travers d'un fil entre la première borne d'alimentation 6 du convertisseur primaire 10 et la deuxième borne 152, 162, 172 de l'enroulement primaire 50, 52, 54 correspondant, et polarisée dans le sens de conduction vers la première borne d'alimentation 6.

Chaque première diode d'isolation de magnétisation 180, 182, 184 est associée respectivement à une deuxième diode d'isolation de démagnétisation différente 190, 192, 194.

Les premières diodes d'isolation de magnétisation, 180, 182, 184, respectivement les deuxièmes diodes d'isolation de démagnétisation 190, 192, 194 assurent la magnétisation indépendante, respectivement la démagnétisation indépendante, des transformateurs 40, 42, 44 et empêchent ainsi la circulation possible de courants entre les transformateurs, en particulier entre leurs enroulements primaires 50, 52, 54.

Les premières diodes d'isolation de magnétisation 180, 182, 184, et les deuxièmes diodes d'isolation de démagnétisation 190, 192, 194 empêchent ainsi toute cause de saturation d'un quelconque des transformateurs 40, 42, 44, liée à la mise en parallèle des transformateurs entre eux sous un régime dissymétrique de distribution des courants. En effet, lorsque aucune isolation n'est prévue, un tel régime laisse des possibilités de circulation de courants continus entre les enroulements primaires des transformateurs suite à la présence de chutes de tensions différentes dans les résistances internes des transformateurs.

Toutes les diodes d'isolation de magnétisation 180, 182, 184 peuvent avantageusement être des diodes de faible tension directe et avoir une tenue de tension inverse inférieure à celle de la source de tension, compte tenu des faibles tensions inverses auxquelles sont soumises ces diodes dans le système.

Les diodes d'isolation de magnétisation 180, 182, 184 peuvent également être des diodes surdimensionnées pour présenter une faible chute de tension car l'existence d'une forte capacité parasite pour ces diodes est compatible avec le fonctionnement du système de conversion.

Les diodes d'isolation de démagnétisation 190, 192, 194 requièrent une tenue en tension inverse au moins égal à la tension différentielle Vc de la source d'alimentation 4, mais pour un courant de faible intensité, en raison de la traversée de chacune des diodes d'un seul courant de démagnétisation correspondant au courant de démagnétisation du transformateur auquel est associée la diode.

Il est à remarquer la possibilité de mettre en oeuvre des montages des diodes d'isolation de magnétisation et de démagnétisation dans différentes zones de connexion situées aussi bien au niveau du bras découpé inférieur, c'est-à-dire ici le deuxième interrupteur 32 connecté à la deuxième borne intermédiaire 36, que sur le bras découpeur supérieur, c'est-à-dire le premier interrupteur 24 connecté à la première borne intermédiaire 30.

Il est également possible de mettre en oeuvre le dispositif d'isolation constitué des diodes d'isolation de magnétisation et de démagnétisation au niveau des deux bras découpeurs inférieur et supérieur. Une telle mise en oeuvre crée des pertes en énergie électrique supplémentaires mais fournit un système parfaitement symétrique.

Suivant les Figures 2, 3, 4 et 5, le problème technique posé par l'absence de diodes d'isolation de magnétisation et démagnétisation du côté des enroulements primaires des transformateurs est expliqué de manière simplifiée à partir d'un schéma électrique de simulation d'un système de conversion d'énergie électrique modulaire 200 représentatif de cette configuration dans lequel deux modules de conversion 202, 204 sont seulement considérés.

Selon le schéma électrique de simulation décrit à la Figure 2, le système de conversion d'énergie électrique modulaire 200 est dépourvu de diodes d'isolation de magnétisation et démagnétisation.

Le système de conversion d'énergie électrique modulaire 200 comprend une source d'alimentation 4 et un convertisseur primaire monophasé 10, identiques à ceux décrits à la Figure 1, les éléments du convertisseur primaire monophasé 10 étant désignés par les mêmes références que celles de la Figure 1.

Toutefois, par commodité de notation le premier interrupteur électronique 24, le deuxième interrupteur électronique 32, la première diode de roue libre 28 et la deuxième roue libre 36 sont désignés respectivement par la suite par K1, K2, Dr1, et Dr2.

Chaque module de conversion 202, 204 comprend respectivement un transformateur différent 208, 210 de même structure, alimenté à partir du pont asymétrique à deux interrupteurs formant le convertisseur primaire monophasé 10, et désigné respectivement par T1, T2.

Chaque module de conversion 202, 204 comprend un redresseur différent 212, 214 formé de deux diodes, et une charge de courant différente 222, 224 incluant une cellule de filtrage de sortie, un régulateur de sortie et une charge de sortie, supposés fonctionner idéalement et non représentés sur la Figure 2.

La charge de courant 222 du module de conversion 202 absorbe un courant de sortie ou de charge désigné par is1, tandis que la charge de courant 224 du module de conversion 204 absorbe un courant de sortie ou de charge désigné par is2.

Chaque transformateur 208, 210 comprend un enroulement primaire 228, 230 ayant respectivement une résistance interne électrique différente notée R1, R2 sur la Figure 2, traversé respectivement par un courant i1+imag1, i2+ imag2, et développant une tension différentielle respective V1, V2.

Les Figures 3, 4 et 5 représentent l'évolution temporelle des courants électriques respectifs i1+imag1, i2+ imag2 traversant les enroulements primaires 228, 230 des deux transformateurs T1, T2 représentés sur la Figure 2, pour différentes configurations de régimes de courants de charge.

Suivant la Figure 3, lorsque le courant de charge is1 du premier transformateur T1 est strictement inférieur au courant de charge is2 du deuxième transformateur T2, l'évolution temporelle du courant i1+imag1 traversant l'enroulement primaire de T1 est représentée par une courbe 250, tandis que l'évolution temporelle du courant i2+imag2 traversant l'enroulement primaire de T2 est représentée par une courbe 252.

Les deux transformateurs T1 et T2 étant supposés identiques et montés en parallèle du coté des enroulements primaires, lorsque le courant i1 traversant l'enroulement primaire 228 du premier transformateur T1 est inférieur au courant i2 traversant l'enroulement primaire 230 du deuxième transformateur T2, ce qui correspond à un courant de charge is1 de T1 inférieur au courant de charge is2 de T2, les chutes de tension dans les deux transformateurs T1 et T2 sont différentes pendant la phase de conduction simultanée des interrupteurs K1 et K2. Il en résulte que la tension différentielle V1 aux bornes de l'enroulement primaire est supérieure à la tension différentielle V2 durant cette phase de conduction. Le courant de magnétisation noté imag1 traversant l'enroulement primaire de T1 et est alors supérieur au courant imag2 en fin de cette phase de conduction.

Lors de la démagnétisation des deux transformateurs T1 et T2, phase qui correspond à la conduction en mode naturel des diodes de roue libre Dr1 et Dr2, les tensions V1 et V2 redeviennent sensiblement identiques compte tenu des très faibles courants de démagnétisation. Toutefois, compte tenu du déséquilibre des tensions différentielles V1, V2 décrit précédemment présent en fin de phase de conduction des interrupteurs, la démagnétisation est plus faible dans le transformateur T1 que la démagnétisation dans le transformateur T2, ce qui conduit à l'échange de courant entre les transformateurs T1, T2 en fin de phase de démagnétisation. Cet échange de courant qui se répète à chaque cycle de démagnétisation conduit à une augmentation du courant moyen dans le transformateur T1 (le moins chargé) et à une diminution du courant moyen dans le transformateur T2.

Même pour une différence entre i1 et i2 qui n'est pas significative, on observe une saturation marquée du transformateur dont la sortie est la moins chargée, ce qui conduit à une perte de rendement du convertisseur.

En cas de différence marquée entre i1 et i2, la zone de défaillance des composants est atteinte, c'est-à-dire un échauffement inacceptable du transformateur a lieu suite à sa saturation, ainsi qu'une surcharge des interrupteurs et des diodes également liée à cette saturation.

Suivant la Figure 4, lorsque les courants de charge is1 et is2 des deux transformateurs T1, T2 sont égaux, l'évolution temporelle du courant i1+imag1 traversant l'enroulement primaire de T1 est représentée par une courbe 260, tandis que l'évolution temporelle du courant i2+imag2 traversant l'enroulement primaire de T2 est représentée par une courbe 262.

Lorsque les courants i1 et i2 sont égaux, c'est à dire les courants de charge is1 et is2 égaux, le phénomène de circulation des courants de magnétisation et démagnétisation ne se produit pas.

Suivant la Figure 5, lorsque le courant de charge is2 du deuxième transformateur T2 est strictement inférieur au courant de charge is1 du premier transformateur T1, l'évolution temporelle du courant i1+imag1 traversant l'enroulement primaire de T1 est représentée par une courbe 270, tandis que l'évolution temporelle du courant i2+imag2 traversant l'enroulement primaire de T2 est représentée par une courbe 272.

Lorsque le courant i2 est inférieur au courant i1, c'est dire lorsque le courant de charge is2 de T2 est inférieur /au courant de charge is1 de T1, le même raisonnement décrit dans les paragraphes descriptifs de la Figure 3 s'appliquent en échangeant les indices des courants, des tensions et des transformateurs.

Selon la Figure 6, un système de conversion d'énergie électrique modulaire 302 simplifié, représentatif du fonctionnement du système de conversion d'énergie électrique modulaire 2 de la Figure 1, comprend le même convertisseur primaire monophasé 10 que celui décrit à la Figure 1.

Le système de conversion d'énergie électrique modulaire 302 est supposé branché en entrée à la même source d'alimentation 4 de la Figure 1.

Le système de conversion 302 comprend ici seulement les deux modules de conversion 12 et 14 décrit à la Figure 1. En effet, il est suffisant pour décrire le fonctionnement général de l'invention décrite à la Figure 1 de se restreindre à deux modules de conversion quelconques du système de conversion 2.

Par commodité de notation, le premier interrupteur électronique 24, le deuxième interrupteur électronique 32, la première diode de roue libre 28, la deuxième roue libre 35, le transformateur 40 du premier module de conversion 12, le transformateur 42 du deuxième module de conversion 14, la première diode d'isolation de magnétisation 180 du premier module 12, la deuxième diode de démagnétisation 190 du premier module 12, la première diode d'isolation de magnétisation 182 du deuxième module 14, la deuxième diode de démagnétisation 192 du deuxième module 14 sont désignés respectivement par la suite par K1, K2, Dr1, Dr2, T1, T2, Dc1, Dm1, Dc2, Dm2.

Suivant la Figure 6, l'étape de magnétisation est décrite par une première série 304 de flèches en trait continu et une deuxième série 306 de flèches en traits interrompus représentant respectivement le sens du courant électrique traversant l'enroulement primaire 50 du premier transformateur T1 et le sens du courant traversant l'enroulement primaire 52 du deuxième transformateur T2.

Le courant électrique i1+imag1 dont le trajet est décrit par la série 304 de flèches part de la première borne d'alimentation 6 et traverse successivement le premier interrupteur K1, l'enroulement primaire 50 du transformateur T1, le première diode d'isolation de magnétisation Dc1 du transformateur T1, le deuxième interrupteur K2.

La première diode d'isolation de magnétisation Dc2 empêche la remontée de la moindre partie du courant i1+imag1 dans l'enroulement primaire 52 du transformateur T2.

Le courant électrique i2+imag2 dont le trajet est décrit par la série 306 de flèches part de la première borne d'alimentation 6 et traverse successivement le premier interrupteur K1, l'enroulement primaire 52 du transformateur T2, la première diode d'isolation de magnétisation Dc2 du transformateur T2, le deuxième interrupteur K2.

La première diode d'isolation de magnétisation Dc1 empêche la remontée de la moindre partie du courant i2+imag2 dans l'enroulement primaire 50 du transformateur T1.

Durant la phase de conduction simultanée des interrupteurs K1 et K2, il est ainsi assuré qu'aucun échange de courant ne se produit lors de la magnétisation des transformateurs T1 et T2, avec la présence des diodes d'isolation de magnétisation Dc1 et Dc2.

Suivant la Figure 7, la phase de démagnétisation qui succède à la phase de conduction est décrite en étant appliquée à la même structure de convertisseur décrite à la Figure 6.

La phase de démagnétisation est décrite par une première série 314 de flèches en trait continu et une deuxième série 316 de flèches en traits interrompus représentant respectivement le sens du courant électrique traversant l'enroulement primaire 50 du premier transformateur T1 et le sens du courant électrique traversant l'enroulement primaire 52 du deuxième transformateur T2.

Le courant électrique i1+imag1 dont le trajet est décrit par la série 314 de flèches part de la deuxième borne d'alimentation 8 et traverse successivement la première diode de diode de roue libre Dr1, l'enroulement primaire 50 du transformateur T1, et la deuxième diode d'isolation de démagnétisation Dm1 du transformateur T1.

La deuxième diode d'isolation de démagnétisation Dm1 canalise la totalité du courant i1+imag1 en favorisant son écoulement vers de la première borne d'alimentation 6 et la première diode d'isolation de magnétisation Dc2 empêche la remontée de la moindre partie du courant i1+imag1 dans l'enroulement primaire 52 du transformateur T2.

Le courant électrique i2+imag2 dont le trajet est décrit par la série 316 de flèches part de la deuxième borne d'alimentation 8 et traverse successivement, l'enroulement primaire 52 du transformateur T2, la deuxième diode d'isolation de démagnétisation Dm2 du transformateur T2.

La deuxième diode d'isolation de démagnétisation Dm2 canalise la totalité du courant i2+imag2 en favorisant son écoulement vers de la première borne d'alimentation 6 et la première diode d'isolation de magnétisation Dc1 empêche la remontée de la moindre partie du courant i2+imag2 dans l'enroulement primaire 50 du transformateur T1.

Durant la phase de démagnétisation aucun échange de courant n'est donc possible entre les transformateurs T1 et T2 en raison de la présence des diodes d'isolation de démagnétisation Dm1 et Dm2 qui canalisent de manière indépendante le courant de démagnétisation du transformateur auquel elles sont raccordées respectivement.

Ainsi, les diodes d'isolation de magnétisation et de démagnétisation Dc1, Dm1, Dc2, Dm2 empêchent le transfert de courant entre les transformateurs T1 et T2 par une démagnétisation indépendante de chaque transformateur en interdisant l'échange de courant en fin de cycle de démagnétisation.

Ainsi, le placement pour chaque module de conversion d'une première diode d'isolation de magnétisation différente connectée directement ou au travers d'un fil en série avec l'enroulement primaire correspondant à l'une quelconque des bornes intermédiaires, et le placement pour chaque module de conversion d'une deuxième diode de démagnétisation différente connectée entre la première borne d'alimentation 6 et l'extrémité de l'enroulement primaire correspondant connectée à la deuxième borne intermédiaire, est une solution qui empêche le transfert de courants gênants entre deux transformateurs quelconques des modules de conversion.

Suivant la Figure 8, un deuxième mode de réalisation 402 du système de conversion est obtenu à partir du système de conversion 2 décrit à la Figure 1 dans lequel tous les éléments sont identiques et désignés par les mêmes références à l'exception d'un unique module de conversion redresseur, désigné par la référence 412 sur la Figure 8.

Le module de conversion 412 est le module de conversion 12 de la Figure 1 dans lequel la première diode d'isolation de magnétisation 180 et la deuxième diode de démagnétisation 190 ont été supprimées.

Ainsi, l'enroulement primaire 50 du transformateur 40 du module de conversion 412 est dispensé d'un dispositif d'isolation propre constituée par une première diode d'isolation de magnétisation et une deuxième diode d'isolation de démagnétisation tout en maintenant la propriété de non circulation d'un courant de magnétisation et/ou un courant de démagnétisation entre le transformateur du module 412 et un transformateur d'un module quelconque restant.

Ici, la diode de roue libre 35 associée au deuxième interrupteur 32 du convertisseur primaire monophasée 10 joue un rôle identique à la deuxième diode de démagnétisation 190 du module 12 des Figures 1 et 2 lors de la phase de démagnétisation, et la liaison filaire reliant l'enroulement primaire 50 du transformateur 40 à la deuxième borne intermédiaire 36 joue un rôle de court circuit en phase de conduction des interrupteurs à l'instar de la première diode d'isolation de magnétisation 180 du module 12 des Figures 1 et 2.

De préférence, le transformateur 40 du module 412 est configuré pour supporter la charge la plus élevée au regard du courant de charge d'un quelconque de modules restants.

Il est remarquer que tout autre module de conversion peut être choisi comme dépourvu d'une première diode d'isolation de magnétisation et d'une deuxième diode de démagnétisation, si les modules restants, le module 12 y compris, sont chacun pourvus respectivement d'une première diode d'isolation de magnétisation et d'une deuxième diode d'isolation de démagnétisation.

Suivant la Figure 9, un troisième mode de réalisation 502 du système de conversion est obtenu à partir du système de conversion 402 décrit à la Figure 8 dans lequel tous les éléments sont identiques et désignés par les mêmes références à l'exception d'un module de conversion redresseur, désigné par la référence 514 sur la Figure 9, qui remplace le module de conversion 14 de la Figure 8.

Le module de conversion 514 est un module à sorties multiples, ici au nombre de trois, les sorties étant désignées respectivement par « voie 21 », « voie 22 », « voie 23 ».

Le module 514 comprend un unique transformateur 542 ayant un unique enroulement primaire 552 et trois enroulements secondaires 558, 560, 562 séparés, couplés magnétiquement en commun à l'enroulement primaire 552.

Chaque enroulement secondaire 558, 560, 562 alimente respectivement une voie de sortie distincte « voie 21 », « voie 22 », « voie 23 » au travers d'une chaîne respective de circuits formée en propre d'un redresseur, d'une cellule de filtrage de sortie, et d'un régulateur direct de sortie.

L'enroulement primaire 552 du transformateur 542 est raccordé au convertisseur primaire monophasé 10 au travers de la première diode d'isolation de magnétisation 182 et de la deuxième diode d'isolation de démagnétisation 192 de la même manière que pour l'enroulement primaire 52 du module 14 décrit à la Figure 8.

Ainsi la solution proposée par l'invention est indépendante du nombre de sorties et d'enroulements secondaires par module de conversion. Seule importe une isolation des enroulements primaires des transformateurs interdisant la circulation de courants de magnétisation et/ou de démagnétisation.

Suivant les Figures 10 et 11, un système de conversion d'énergie électrique modulaire 592 simplifié, représentatif du fonctionnement du système de conversion d'énergie électrique modulaire 402, 502 des Figures 8 et 9, comprend le même convertisseur primaire monophasé 10 que celui décrit à la Figure 1, les éléments formant le convertisseur primaire 10 étant désignés par les mêmes références numériques que celles de la Figure 8.

Le système de conversion d'énergie électrique modulaire 592 comprend à l'instar du système de conversion d'énergie électrique modulaire de la Figue 8, des modules de conversion redresseurs de structure identique, seuls les deux modules de conversion 412 et 14 étant représentés à titre d'exemple pour décrire le fonctionnement de l'invention. Il est supposé ici que tous les modules de conversion sauf le module de conversion 412 sont équipés chacun avec une paire différente de diodes d'isolation, chaque paire étant constituée d'une première diode de magnétisation et d'une deuxième diode d'isolation de démagnétisation.

Par commodité de notation, le premier interrupteur électronique 24, le deuxième interrupteur électronique 32, la première diode de roue libre 28, la deuxième diode de roue libre 35, le transformateur 40 du premier module de conversion 412, le transformateur 42 du deuxième module de conversion 14, la première diode d'isolation de magnétisation 182 du deuxième module 14, la deuxième diode de démagnétisation 192 du deuxième module 14 sont désignés respectivement par la suite par K1, K2, Dr1, Dr2, T1, T2, Dc2, Dm2.

Suivant la Figure 10, l'étape de magnétisation est décrite par une première série 594 de flèches en trait continu et une deuxième série 596 de flèches en traits interrompus, représentant respectivement le sens du courant électrique traversant l'enroulement primaire 50 du premier transformateur T1 et le sens du courant électrique traversant l'enroulement primaire 52 du deuxième transformateur T2.

Le courant électrique i1+imag1 dont le trajet est décrit par la série 594 de flèches part de la première borne d'alimentation 6 et traverse successivement le premier interrupteur K1, l'enroulement primaire 50 du transformateur T1, le deuxième interrupteur K2.

La première diode d'isolation de magnétisation Dc2 empêche la remontée de la moindre partie du courant i1+imag1 dans l'enroulement primaire 52 du transformateur T2.

Le courant électrique i2+imag2 dont le trajet est décrit par la série 596 de flèches part de la première borne d'alimentation 6 et traverse successivement le premier interrupteur K1, l'enroulement primaire 52 du transformateur T2, la diode d'isolation de magnétisation Dc2, et le deuxième interrupteur K2.

Durant la phase de conduction simultanée des interrupteurs K1 et K2, il est assuré qu'aucun n'échange de courant ne se produit lors de la magnétisation des transformateurs T1 et T2, avec la présence de la diode d'isolation de magnétisation Dc2 seulement.

Suivant la Figure 11, la phase de démagnétisation qui succède à la phase de conduction est décrite par une première série 597 de flèches en traits continus et une deuxième série 598 de flèches en traits interrompus, représentant respectivement le sens du courant électrique traversant l'enroulement primaire 50 du premier transformateur T1 et le sens du courant électrique traversant l'enroulement primaire 52 du deuxième transformateur T2.

Le courant électrique i1+ imag1 dont le trajet est décrit par la série 597 de flèches part de la deuxième borne d'alimentation 8 et traverse successivement la première diode de roue libre Dr1, l'enroulement primaire 50 du transformateur T1, et la deuxième diode de roue libre Dr2.

La deuxième diode de roue libre Dr2 canalise la totalité du courant i1+ imag1 en favorisant son écoulement vers la première borne d'alimentation 6 et la première diode de d'isolation de magnétisation Dc2 empêche la remontée de la moindre partie du courant i1 + imag1 dans l'enroulement primaire 52 du transformateur T2.

Le courant électrique i2+ imag2 dont le trajet est décrit par la série 598 de flèches part de la deuxième borne d'alimentation 8 et traverse successivement la première diode de roue libre Dr1, l'enroulement primaire 52 du transformateur T2, et la deuxième diode d'isolation de démagnétisation Dm2 du transformateur T2.

La deuxième diode d'isolation de démagnétisation Dm2 canalise la totalité du courant i2+ imag2 en favorisant son écoulement vers la première borne d'alimentation 6.

Durant la phase de démagnétisation aucun échange de courant n'est possible entre les transformateurs T1 et T2 en raison de la présence de la deuxième diode d'isolation de démagnétisation Dm1 et de la deuxième diode de roue libre Dr2 qui canalisent de manière indépendante le courant de démagnétisation du transformateur auquel elles sont raccordées respectivement.

Durant la phase de démagnétisation, la diode Dc2 d'isolation de magnétisation empêche également la circulation d'un courant de démagnétisation depuis le transformateur T1 vers le deuxième transformateur T2.

La circulation d'un courant de démagnétisation depuis le deuxième transformateur T2 vers le premier transformateur T1 est également impossible, car ce chemin (représenté sur la Figure 11 par une flèche barrée) correspond à une chute de tension, égale à 2 x Vdiode, aux bornes des diodes Dc2 et Dr2 formant un circuit série dans ce chemin. Or cette chute de tension est supérieure à la chute de tension de 1 x Vdiode aux bornes de la diode Dm2 seule lorsque cette diode Dm2 est traversée par un courant de démagnétisation depuis le deuxième transformateur T2 vers la première borne 6 de la source d'alimentation 4, trajet qui définit donc le chemin effectivement suivi par le courant de démagnétisation.

Ainsi, les diodes d'isolation de magnétisation et de démagnétisation Dc2, Dm2 et la deuxième diode de roue libre Dr2 empêchent le transfert de courant entre les transformateurs T1 et T2 par une démagnétisation indépendante de chaque transformateur en interdisant l'échange de courant en fin de cycle de démagnétisation.

Ainsi, le placement d'une première diode d'isolation de magnétisation différente en série avec l'interrupteur d'un seul des bras et d'une deuxième diode de démagnétisation différente pour chaque enroulement primaire de chaque transformateur à l'exception de l'enroulement primaire du transformateur, de préférence celui configuré pour être le plus chargé, est une solution qui empêche le transfert de courants gênant entre les transformateur du système de conversion.

Cette solution dont le nombre de diodes d'isolation supplémentaires est égale à deux fois le nombre total N de modules moins un présente l'intérêt d'éviter la baisse de rendement liée à la perte d'énergie dissipée par une diode pour la sortie du système la plus puissante par exemple. Dans ce système, il est à remarquer que 2N - 1 diodes supplémentaires sont nécessaires.

D'une manière générale, englobant notamment tous les modes de réalisation des systèmes de conversion décrits dans les Figures 1, 8 et 9, chaque enroulement primaire, associé à un module de conversion différent, comprend une première borne et une deuxième borne d'enroulement primaire, connectées respectivement à la première borne intermédiaire et à la deuxième borne intermédiaire du convertisseur primaire.

Le nombre total de modules de conversion alimentés par le convertisseur primaire étant désigné par N, chacun d'au moins le nombre total moins un, c'est-à-dire N -1, des modules de conversion comprend respectivement une première diode d'isolation de magnétisation connectée directement ou au travers d'une liaison filaire en série avec l'enroulement primaire associé pour former un circuit série branché entre la première borne intermédiaire et la deuxième borne intermédiaire du convertisseur primaire.

Chacun d'au moins le nombre total moins un, c'est-à-dire N -1, des modules de conversion comprend également respectivement une deuxième diode d'isolation de démagnétisation, connectée directement ou au travers d'un fil entre la première borne d'alimentation intermédiaire du convertisseur primaire et la borne de l'enroulement primaire connectée à la diode d'isolation de magnétisation, et polarisée dans un sens de conduction vers la première borne d'alimentation.

Chacun des N modules de conversion comprend un transformateur différent ayant un unique enroulement primaire branché entre les première et deuxième bornes intermédiaires du convertisseur primaire monophasé, et au moins un enroulement secondaire, et, associées de manière propre à chaque enroulement secondaire, un redresseur monophasé différent, une cellule de filtrage d'ondulations résiduelles différente, une paire distincte de bornes de sortie d'extrémité modulaire, le transformateur, le redresseur monophasé, la cellule de filtrage étant configurés pour convertir l'énergie électrique fournie en sortie du convertisseur primaire monophasé en de l'énergie électrique délivrée sur la paire de bornes de sortie d'extrémité modulaire, sous une tension différentielle de sortie modulaire prédéterminé pour un courant de charge de sortie modulaire prédéterminé,

Suivant la Figure 12, un quatrième mode de réalisation 602 du système de conversion est dérivé directement du système de conversion 402 décrit à la Figure 8 en déportant à distance du convertisseur primaire 10 par des câbles les transformateurs des modules de conversion.

Le système de conversion 602 comprend le même convertisseur primaire 10 que celui décrit à la Figure 8 et plusieurs modules de conversion, trois seulement étant représentés ici, désignés respectivement par les références 612, 614, 616.

Les modules de conversion 612, 614, 616 sont respectivement les modules de conversion 412, 14, 16 représentés à la Figure 8 dans chacun desquels un câble différent 622, 624, 626 de liaison torsadée bifilaire blindée a été incorporé.

Chaque câble 622, 624, 626 comprend un premier fil 632, 634, 636 et un deuxième fil 642, 644, 646 connectés respectivement à une extrémité différente de l'enroulement primaire 50, 52, 54 du module de conversion correspondant 612, 614, 616.

Le premier fil 632, le deuxième fil 642 respectivement, du câble 622 du module de conversion 611 dépourvu de diodes d'isolation de magnétisation et démagnétisation, est connecté entre, du côté du convertisseur primaire 10, la première borne intermédiaire 30, la deuxième borne intermédiaire 36 respectivement, et, du côté du transformateur 40, une première extrémité 652, une deuxième extrémité 654 respectivement, de l'enroulement primaire 50 du module de conversion 612.

La première diode d'isolation de magnétisation 182 et la deuxième diode d'isolation de démagnétisation 192 du module de conversion 614 sont connectées directement et respectivement à la deuxième borne intermédiaire 36 et à la première borne d'alimentation 6.

Le premier fil 634 du câble 624 est connecté directement entre, du côté du convertisseur primaire, la première borne intermédiaire 30, et, du côté du transformateur 42, une première extrémité 656 de l'enroulement primaire 52 du transformateur 42.

Le deuxième fil 644 du câble 624 est connecté directement entre, du côté du convertisseur primaire, la première diode d'isolation de magnétisation 182 et la deuxième diode de démagnétisation 192, et, du côté du transformateur 42, une deuxième extrémité 658 de l'enroulement primaire 52 du transformateur 42.

La première diode d'isolation de magnétisation 184 et la deuxième diode d'isolation de démagnétisation 194 du module de conversion 616 sont connectées directement et respectivement à la deuxième borne intermédiaire 36 et à la première borne d'alimentation 6.

Le premier fil 636 du câble 626 est connecté directement entre, du côté du convertisseur primaire 10, la première borne intermédiaire 30, et, du côté du transformateur 44, une première extrémité 660 de l'enroulement primaire 54 du transformateur 44.

Le deuxième fil 646 du câble 626 est connecté directement entre, du côté du convertisseur primaire 10, la première diode d'isolation de magnétisation 184 et la deuxième diode de démagnétisation 194, et, du côté du transformateur 44, une deuxième extrémité 662 de l'enroulement primaire 54 du transformateur 44.

De manière générale, chaque module de conversion comprend un câble différent de liaison torsadée bifilaire blindée ayant un premier fil et un deuxième fil connectés respectivement à une extrémité différente de l'enroulement primaire du module de conversion.

Lorsque le module de conversion est dépourvu de diode d'isolation de magnétisation et de diode d'isolation de démagnétisation, les premier et deuxième fils sont connectés directement respectivement à une borne intermédiaire différente du convertisseur primaire.

Lorsque le module de conversion comprend une première diode d'isolation de magnétisation, la première diode d'isolation de magnétisation est connectée à l'une des bornes intermédiaires du convertisseur primaire et l'un des fils relie la première diode d'isolation à une extrémité de l'enroulement primaire,

Lorsque le module de conversion comprend une deuxième diode d'isolation de démagnétisation, la deuxième diode d'isolation est connectée à la première borne d'alimentation 6 et l'un des fils relie la deuxième diode d'isolation de démagnétisation à une extrémité de l'enroulement primaire.

Chaque borne intermédiaire du convertisseur primaire est connectée, pour chaque module de conversion, directement ou au travers d'une première diode d'isolation, à un fil différent câble du module de conversion.

Cette mise en oeuvre, proposée dans la Figure 12, d'une distribution modulaire de puissance déportée à partir d'un pont asymétrique à deux interrupteurs et au travers de liaisons bifilaires torsadées, est pratique et intéressante dans le cas où il existe des contraintes physiques qui imposent l'éloignement depuis le convertisseur primaire des transformateurs des modules de conversion. Par exemple, une telle distribution est applicable à l'architecture d'un bus d'alimentation d'un satellite.

L'arrangement des diodes d'isolation de magnétisation et/ou démagnétisation tel que proposé empêche la circulation de courants de magnétisation et/ou de démagnétisation entre les transformateurs et dans les câbles.

Il est à remarquer qu'une solution de distribution d'énergie modulaire déportée par des câbles depuis le convertisseur primaire n'est possible ici qu'en raison de l'utilisation d'un convertisseur primaire ayant la structure d'un pont asymétrique à deux interrupteurs. Une telle solution déportée ne saurait être envisagée avec des structures classiques de type direct (en anglais forward) ou à retour (en anglais flyback) de convertisseur à un seul interrupteur qui ne permette pas d'empêcher le renvoi sans pertes du coté primaire de l'énergie magnétique emmagasinée dans les inductances de fuite des câble. des surtensions inacceptables.

Suivant la Figure 13, un cinquième mode de réalisation 702 du système de conversion est une variante du quatrième mode de réalisation 602 de la Figure 12, dans laquelle la distribution d'énergie est mise en oeuvre en déportant à distance du convertisseur primaire 10 par des câbles les transformateurs des modules de conversion avec les circuits des diodes de magnétisation et/ou démagnétisation situés du coté des transformateurs des modules de conversion.

Le système de conversion 702 comprend le même convertisseur primaire 10 que celui décrit à la Figure 8 et plusieurs modules de conversion, trois seulement étant représentés ici, désignés respectivement par les références 712, 714, 716.

Les modules de conversion 712, 714, 716 sont respectivement les modules de conversion 412, 414, 416 représentés dans la Figure 8 dans chacun desquels un câble différent 722, 724, 726 a été incorporé.

Le câble 722 du seul module de conversion 712 dépourvu d'une diode d'isolation de démagnétisation est formé par une liaison bifilaire.

Les câbles 724, 726 des modules de conversion 714, 716 comportant chacun une première diode d'isolation de magnétisation et une deuxième diode d'isolation de démagnétisation, sont formés chacun par une liaison torsadée trifilaire blindée,

Chaque câble bifilaire ou trifilaire 722, 724, 726 possède respectivement un premier fil 732, 734, 736 et un deuxième fil 742, 744, 746.

Chaque câble trifilaire 724, 726 possède un troisième fil 754, 756.

Le premier fil 732, le deuxième fil 742 respectivement, du câble 722 du module de conversion 712 dépourvu de diodes d'isolation de magnétisation et démagnétisation, est connecté directement entre, du côté du convertisseur primaire 10, la première borne intermédiaire 30, la deuxième borne intermédiaire 36 respectivement, et, du côté du transformateur 40, une première extrémité 762, une deuxième extrémité 764 respectivement, de l'enroulement primaire 50 du module de conversion 712.

La première diode d'isolation de magnétisation 182 et la deuxième diode d'isolation de démagnétisation 192 du module de conversion 714 sont connectées directement à une première extrémité 766 de l'enroulement primaire 52 du transformateur 42.

Le premier fil 734 du câble 724 est connecté directement entre, du côté du convertisseur primaire, la première borne intermédiaire 30, et, du côté du transformateur 42, une deuxième extrémité 768 de l'enroulement primaire 52 du transformateur 42.

Le deuxième fil 744 du câble 724 est connecté directement entre, du côté du convertisseur primaire, la deuxième borne intermédiaire 36 du convertisseur primaire 10, et, du côté du transformateur 42, la première diode d'isolation de magnétisation 182.

Le troisième fil 754 du câble 724 est connecté directement entre, du côté du convertisseur primaire 10, la première borne d'alimentation 6, et, du côté du transformateur 42, la deuxième diode d'isolation de démagnétisation 192.

La première diode d'isolation de magnétisation 184 et la deuxième diode d'isolation de démagnétisation 194 du module de conversion 716 sont connectées directement à une première extrémité 770 de l'enroulement primaire 54 du transformateur 44.

Le premier fil 736 du câble 726 est connecté directement entre, du côté du convertisseur primaire 10, la première borne intermédiaire 30, et, du côté du transformateur 44, une deuxième extrémité 772 de l'enroulement primaire 54 du transformateur 44.

Le deuxième fil 746 du câble 726 est connecté directement entre, du côté du convertisseur primaire, la deuxième borne intermédiaire 36 du convertisseur primaire 10, et, du côté du transformateur 44, la première diode d'isolation de magnétisation 184.

Le troisième fil 756 du câble 726 est connecté directement entre, du côté du convertisseur primaire 10, la première borne d'alimentation 6, et, du côté du transformateur 44, la deuxième diode d'isolation de démagnétisation 194.

De manière générale, chaque module de conversion comprend un câble différent.

Lorsque tous les modules de conversion comportent chacun une première diode de magnétisation et une deuxième diode de démagnétisation, chaque câble est formé par une liaison torsadée trifilaire blindée à trois fils.

Lorsqu'un seul des modules de conversion est dépourvu d'une diode d'isolation de démagnétisation et les modules de conversion restants comportent chacun une première diode de magnétisation et une deuxième diode de démagnétisation, un seul câble est formé par une liaison bifilaire et les câbles restants sont formés chacun par une liaison torsadée trifilaire blindée.

Chaque câble bifilaire et trifilaire possède respectivement un premier fil et un deuxième fil, connectés chacun à une borne intermédiaire différente du convertisseur primaire.

Chaque câble trifilaire possède un troisième fil, connecté directement à la première borne d'alimentation 6.

Les premier et deuxième fils de chaque câble bifilaire ou trifilaire sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du module de conversion et l'autre fil étant connecté directement à l'extrémité restante de l'enroulement primaire lorsque le câble est trifilaire, les premier et deuxième étant connectés chacun à une extrémité différente de l'enroulement primaire du module de conversion lorsque le câble est bifilaire,

Le troisième fil de chaque câble trifilaire est connecté à une deuxième diode de démagnétisation du module de conversion correspondant.

Suivant la Figure 14, un sixième mode de réalisation 802 du système de conversion est dérivé du cinquième mode de réalisation 702, décrit à la Figure 13, en remplaçant le module de conversion 714 à une seule tension différentielle de sortie par un module de conversion 814 à tensions différentielles de sortie multiples.

Le module de conversion 814 comprend le même câble 724, les mêmes diodes d'isolation de magnétisation et/ou de démagnétisation 182, 192 que ceux du module de conversion 714, et le même transformateur 542 que celui du module 514 décrit à la Figure 9. Le module de conversion 814 comprend également les mêmes éléments et la même architecture des circuits disposés en aval des enroulements secondaires du transformateur 542 que ceux décrits à la Figure 9.

De même l'agencement du câble 724 et diodes d'isolation de magnétisation et/ou de démagnétisation 182, 192 relativement au convertisseur primaire 10 et à l'enroulement primaire du transformateur 552 est identique à celui décrit à la Figure 13.

Suivant la Figure 15, un septième mode de réalisation 802 de système de conversion, dérivé du sixième mode de réalisation 702 de la Figure 14, est décrit dans lequel les câbles trifilaires blindés sont remplacés par des câbles quadrifilaires.

Le système de conversion 902 comprend les mêmes éléments que ceux décrivant le système de conversion 802, à l'exception des modules de conversion 814 et 816 qui sont respectivement remplacés par les modules de conversion 914 et 916.

Les modules de conversion 914, 916 comprennent respectivement les mêmes éléments que ceux décrivant les modules de conversion 814, 816 à l'exception des câbles trifilaires blindés 824, 826 qui sont remplacés respectivement par les câbles quadrifilaire non blindés 924, 926.

Chaque câble quadrifilaire 924, 926 possède respectivement un premier fil 934, 936, un deuxième fil 944, 946, un troisième fil 954, 956, un quatrième fil 964, 966, une capacité de filtrage auxiliaire 974, 976, une diode auxiliaire d'isolation 984, 986.

Seuls les premier et deuxième fils d'un même câble quadrifilaire 924, 926 forment une liaison torsadée.

La première diode d'isolation de magnétisation 182 et la deuxième diode d'isolation de démagnétisation 192 du module de conversion 914 sont connectées directement à une première extrémité 996 de l'enroulement primaire 552 du transformateur 542.

Le premier fil 934 du câble 924 est connecté directement entre, du côté du convertisseur primaire, la première borne intermédiaire 30, et, du côté du transformateur 542, une deuxième extrémité 998 de l'enroulement primaire 552 du transformateur 542.

Le deuxième fil 944 du câble 924 est connecté directement entre, du côté du convertisseur primaire, la deuxième borne intermédiaire 36 du convertisseur primaire 10, et, du côté du transformateur 542, la première diode d'isolation de magnétisation 182.

Le troisième fil 954 du câble 924 est connecté directement entre, du côté du convertisseur primaire 10, la première borne d'alimentation 6, et, du côté du transformateur 542, la deuxième diode d'isolation de démagnétisation 192.

Le quatrième fil 964 du câble 924 connecté entre, du côté du convertisseur primaire directement à la deuxième borne d'alimentation 8, et, du côté du transformateur 542, la deuxième extrémité 998 de l'enroulement primaire au travers de la diode auxiliaire 984 montée en série.

La capacité auxiliaire 974 est branchée entre les troisième et quatrième fils du câble quadrifilaire.

La première diode d'isolation de magnétisation 184 et la deuxième diode d'isolation de démagnétisation 194 du module de conversion 916 sont connectées directement à la première extrémité de l'enroulement primaire 54 du transformateur 44.

Le premier fil 936 du câble 926 est connecté directement entre, du côté du convertisseur primaire, la première borne intermédiaire 30, et, du côté du transformateur 44, une deuxième extrémité de l'enroulement primaire 54 du transformateur 44.

Le deuxième fil 946 du câble 926 est connecté directement entre, du côté du convertisseur primaire, la deuxième borne intermédiaire 36 du convertisseur primaire 10, et, du côté du transformateur 442, la première diode d'isolation de magnétisation 184.

Le troisième fil 956 du câble 926 est connecté directement entre, du côté du convertisseur primaire 10, la première borne d'alimentation 6, et, du côté du transformateur 44, la deuxième diode d'isolation de démagnétisation 194.

Le quatrième fil 966 du câble 926 est connecté entre, du côté du convertisseur primaire directement à la deuxième borne d'alimentation 8, et, du côté du transformateur 44, la deuxième extrémité de l'enroulement primaire au travers de la diode auxiliaire 986 montée en série.

La capacité auxiliaire 976 est branchée entre les troisième et quatrième fils du câble quadrifilaire.

De manière générale, chaque module de conversion comprend un câble différent.

Lorsque tous les modules de conversion comportent chacun une première diode de magnétisation et une deuxième diode de démagnétisation, chaque câble est formé par une liaison quadrifilaire ayant une liaison bifilaire torsadée formée par un premier fil et un deuxième, et ayant un troisième fil, un quatrième fil, une capacité de filtrage auxiliaire et une diode auxiliaire d'isolation,

Lorsqu'un seul des modules de conversion est dépourvu d'une diode d'isolation de démagnétisation et les modules de conversion restants comportent chacun une première diode de magnétisation et une deuxième diode de démagnétisation, un seul câble est formé par une liaison bifilaire ayant un premier fil et une deuxième fil, et les câbles restants sont formés chacun par une liaison quadrifilaire de même architecture que celle utilisée lorsque tous les modules de conversion comportent chacun une première diode de magnétisation et une deuxième diode de démagnétisation,

Lorsque le câble est bifilaire, les premier et deuxième fils sont connectés vers le convertisseur primaire à une borne intermédiaire différente et sont connectés chacun à une extrémité différente de l'enroulement primaire du module de conversion.

Lorsque le câble est quadrifilaire, le premier fil et le deuxième fil sont connectés chacun vers le convertisseur primaire à une borne intermédiaire différente, et sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du module de conversion et l'autre fil étant connecté directement à l'extrémité restante de l'enroulement primaire.

Le troisième fil de chaque câble quadrifilaire est connecté vers le module de conversion à la deuxième diode de démagnétisation, et connecté directement à la première borne d'alimentation.

Le quatrième fil est connecté vers le module de conversion directement à la deuxième borne d'alimentation, et est connecté au travers de la diode auxiliaire à l'extrémité de l'enroulement primaire qui est connectée à la première borne intermédiaire.

La capacité auxiliaire est branchée entre les troisième et quatrième fils.

Pour chaque module de conversion pourvu d'une diode d'isolation de magnétisation et d'une diode d'isolation de démagnétisation disposées du côté de son transformateur, la diode auxiliaire et la capacité de filtrage supplémentaire permettent de démagnétiser des transformateurs avec des courants de magnétisation plus importants sans générer de surtensions aux diodes de démagnétisation liées aux inductances de fuite du câblage. Compte tenu de la présence de ces capacités supplémentaires de découplage, il n'y a plus besoin de coupler les fils d'alimentation positive et négative avec les deux autres fils, ces deux fils ne voyant qu'un courant de démagnétisation moyenné sur la période.

Suivant la Figure 16, un huitième mode de réalisation 1002 du système de conversion est dérivé du système de conversion 602 décrit à la Figure 8.

A l'instar du système 602, le système de conversion 1002 comprend le même convertisseur primaire 10, déporté par les mêmes câbles 622, 624, 626 à distance des transformateurs 1012, 1014, 1016 des modules de conversion associés, 1022, 1024 et 1026.

Chaque module de conversion, redresseurs, 1022, 1024, 1026 comprend respectivement un câble différent 622, 624, 626 de liaison torsadée bifilaire blindée, et un unique transformateur différent 1012, 1014, 1016.

Chaque transformateur 1012, 1014, 1016 possède un unique enroulement primaire 1050, 1052, 1054 différent, branché respectivement entre les première et deuxième bornes intermédiaires 30, 36 du convertisseur primaire monophasé 10 au travers du câble correspondant 622, 624, 626, et possède au moins un enroulement secondaire 1056, 1058, 1060 de charge utile.

Chacun des trois modules de conversion redresseur 1022, 1024, 1026 comprend, associé pour chaque enroulement secondaire de charge utile correspondant 1056, 1058, 1060, un redresseur monophasé différent 1066, 1068, 1070, une cellule différente 1076, 1078, 1080 de filtrage passe-bas des ondulations résiduelles, une paire distincte 1086, 1088, 1090 de bornes de sorties d'extrémité modulaire, un régulateur direct de sortie 1096, 1098, 1100 différent de régulation d'une tension différentielle de sortie différente.

Chaque câble 622, 624, 626 comprend à l'instar de la figure 12 un premier fil 632, 634, 636, un deuxième fil 642, 644, 646 respectivement.

Le premier module 1022 est supposé être destiné à alimenter la charge électrique la plus élevée parmi toutes les charges électriques de sortie alimentées par l'ensemble des modules de conversion. Le premier module 1022 est dépourvu de diodes d'isolation de magnétisation et démagnétisation.

Le deuxième module 1024, le troisième module 1026 respectivement, comprend une première diode d'isolation de magnétisation 1182 et une deuxième diode de démagnétisation différente 1192, une première diode d'isolation de magnétisation 1184 et une deuxième diode de démagnétisation différente 1194.

Le premier fil 632, le deuxième fil 642 respectivement, du câble 622 du premier module de conversion 1022 dépourvu de diodes d'isolation de magnétisation et démagnétisation, est connecté entre, du côté du convertisseur primaire 10, la première borne intermédiaire 30, la deuxième borne intermédiaire 36 respectivement, et, du côté du transformateur 1012, une première extrémité 1252, une deuxième extrémité 1254 respectivement, de l'enroulement primaire 1050 du module de conversion 1022.

Le premier fil 634 du câble 624 est connecté directement entre, du côté du convertisseur primaire 10, la première borne intermédiaire 30, et, du côté du transformateur 1014, une première extrémité 1256 de l'enroulement primaire 1052 du transformateur 1014.

Le deuxième fil 644 du câble 624 est connecté directement entre, du côté du convertisseur primaire 10, la deuxième borne intermédiaire 36 et, du côté du transformateur 1014, la première diode d'isolation de magnétisation 1182, la première diode d'isolation de magnétisation 1182 étant connectée directement à une deuxième extrémité 1258 de l'enroulement primaire 1052 du transformateur 1014 en étant polarisée en conduction directe en partant de la deuxième extrémité 1258 de l'enroulement primaire 1052.

Le premier fil 636 du câble 626 est connecté directement entre, du côté du convertisseur primaire 10, la première borne intermédiaire 30, et, du côté du transformateur 1016, une première extrémité 1260 de l'enroulement primaire 1054 du transformateur 1016.

Le deuxième fil 646 du câble 626 est connecté directement entre, du côté du convertisseur primaire 10, la deuxième borne intermédiaire 36 et, du côté du transformateur 1016, la première diode d'isolation de magnétisation 1184, la première diode d'isolation de magnétisation 1184 étant connectée directement à une deuxième extrémité 1262 de l'enroulement primaire 1054 du transformateur 1016 en étant polarisée en conduction directe en partant de la deuxième extrémité 1262 de l'enroulement primaire 1054.

Les diodes d'isolation de démagnétisation 1192, 1194 associées respectivement aux diodes d'isolation de magnétisation 1182, 1184 sont branchées du coté secondaire de leur transformateur correspondant 1014, 1016.

Selon une première configuration d'implantation de la diode d'isolation de démagnétisation, dite sans enroulement secondaire supplémentaire et illustrée par le deuxième module 1024, la diode d'isolation magnétique 1192 est branchée entre l'entrée de la bobine du régulateur magnétique 1098, c'est à directement à une sortie de l'enroulement secondaire 1058 de charge utile, et la borne de sortie 1088 de polarité négative au travers d'un circuit de dissipation et/ou récupération 1202.

Le circuit de dissipation et/ou récupération 1202 est compris dans l'ensemble formé par une association en série d'une diode zener et d'une résistance, une association en parallèle d'une capacité sur un circuit série, composé d'une diode zéner et d'une résistance. En variante, la diode zener peut être remplacée par une diode zener et une diode classique montées tête bêche.

Selon un premier mécanisme, la démagnétisation est mise en oeuvre par dissipation au travers de la diode zener et de la résistance.

Selon un deuxième mécanisme, la démagnétisation est mise en oeuvre par récupération dans une tension auxiliaire à bas niveau négative, limitée à la tension de la diode zener.

Selon une deuxième configuration d'implantation de la diode d'isolation de démagnétisation, dite avec enroulement secondaire supplémentaire et illustrée par le troisième module 1026, le transformateur 1016 comprend un enroulement secondaire supplémentaire 1206 dédié uniquement à la démagnétisation.

La diode d'isolation de démagnétisation 1194 est branchée entre une sortie de l'enroulement secondaire supplémentaire 1206 et une première borne 1208 de polarité positive d'un circuit de dissipation et/ou récupération 1212, le circuit de dissipation et/ou récupération 1212 ayant une deuxième borne 1214 connectée à la borne restante de l'enroulement secondaire supplémentaire 1206.

Le circuit de dissipation et/ou récupération 1212 est compris dans l'ensemble formé par une association en série d'une diode zener et d'une résistance, une association en parallèle d'une capacité sur un circuit série composé d'une diode zéner et d'une résistance, et une capacité seule. En variante, la diode zener peut être remplacée par une diode zener et une diode classique montées tête bêche.

Selon un premier mécanisme, la démagnétisation est mise en oeuvre par dissipation au travers de la diode zener et de la résistance.

Selon un deuxième mécanisme correspondant à l'association parallèle diode zener/capacité, la démagnétisation est mise en oeuvre par récupération dans une tension auxiliaire à bas niveau négative, limitée à la tension de la diode zener.

Lorsque le circuit de dissipation et/ou récupération 1212 est une unique capacité les première et deuxième bornes 1208, 1214 sont connectées aux bornes de sortie 1090 du module 1026 avec des polarités correspondantes. Selon un troisième mécanisme, la démagnétisation est mise en oeuvre par récupération dans la tension de sortie régulée du module 1016. Pour une mise en oeuvre avantageuse de ce mécanisme, il est nécessaire de disposer d'une charge électrique du module 1026 suffisante.

Suivant la Figure 16, d'une distribution modulaire de puissance déportée à partir d'un pont asymétrique à deux interrupteurs et au travers de liaisons bifilaires torsadées, est pratique et intéressante dans le cas où il existe des contraintes physiques qui imposent l'éloignement depuis le convertisseur primaire des transformateurs des modules de conversion. Par exemple, une telle distribution est applicable à l'architecture d'un bus d'alimentation d'un satellite.

L'arrangement des diodes d'isolation de magnétisation et/ou démagnétisation tel que proposé empêche la circulation de courants de magnétisation et/ou de démagnétisation entre les transformateurs et dans les câbles.

Selon une variante du système 1002 décrite à la Figure 16, tous les modules de conversion comprennent chacun une diode d'isolation de magnétisation différente et une diode d'isolation de démagnétisation.

Selon une autre variante du système 1002 décrite à la Figure 16, les câbles de déport 622, 624, 626 sont remplacés par des liaisons de connexion courtes.

En variante des modes de réalisation de système d'alimentation décrits depuis la Figure 8 à la Figure 16, lorsque l'inductance de fuite, présentée par le câblage ou plus généralement la connectique reliant l'ensemble des transformateurs et le convertisseur primaire, est suffisamment faible pour renvoyer sur les interrupteurs une énergie de démagnétisation compatible des capacités d' absorption et de dissipation de cette énergie par les interrupteurs, la deuxième roue libre et de démagnétisation 35 du convertisseur primaire 10 peut être supprimée.

L'ensemble des modes de réalisation du système d'alimentation selon l'invention, décrit ci-dessus depuis la Figure 1 à la Figure 16, respecte les règles de conception suivantes.

Lorsqu'un module de conversion redresseur comprend une diode d'isolation de magnétisation, celle-ci est placée du coté du primaire du transformateur, et le module de conversion comprend obligatoirement une diode d'isolation de démagnétisation placée du côté du primaire ou du coté secondaire du transformateur.

Tous les modules de conversion ou tous les modules de conversion moins un module, comportent chacun une diode d'isolation de magnétisation différente placée du coté du primaire de son transformateur associé.

Lorsque tous les modules de conversion comprennent chacun une diode d'isolation de magnétisation différente et que l'inductance de fuite, présentée par le câblage, ou plus généralement la connectique entre l'ensemble des transformateurs et le convertisseur primaire, est suffisamment faible, il est permis de supprimer la deuxième diode de roue libre et de démagnétisation 35 du convertisseur primaire.

Suivant les Figures 17, 18 et 19 des montages plus complexes des diodes d'isolation de magnétisation sont décrits pour lesquels la tension inverse des diodes d'isolation de magnétisation seules peut encore être réduite et qui n'altèrent pas le fonctionnement du système. Ces circuits permettent l'usage de diodes basse tension performantes et peuvent consister en la mise en parallèle d'une limitation d'excursion en tension inverse, par capacité, par diode zener, voire par une seule ou une série de plusieurs diodes anti-retour disposées de manière anti parallèle.

Suivant la Figure 17 une configuration 2002 d'isolation d'un transformateur 2004 de module de conversion comprend à titre d'exemple une diode d'isolation de magnétisation 2006, connectée entre une extrémité de l'enroulement du transformateur 2004 et la deuxième borne intermédiaire 36, et une diode d'isolation de démagnétisation 2008 connectée entre la première borne d'alimentation 6 et l'extrémité de l'enroulement primaire connectée à la diode d'isolation de magnétisation 2006 en étant polarisée dans le sens de la conduction vers la première borne d'alimentation 6.

Un circuit d'isolation de magnétisation 2010 est formé à partir de la diode d'isolation de magnétisation 2006 sur laquelle est branchée en anti-parallèle une série de deux diodes anti-retour 2012, 2014.

Suivant la Figure 18, une configuration 2016 d'isolation d'un transformateur 2004 de module de conversion est une variante de la configuration 2002 comprenant un circuit d'isolation de magnétisation 2018 différent.

Le circuit d'isolation de magnétisation 2018 est formé à partir de la diode d'isolation de magnétisation 2006 sur laquelle est branchée en parallèle une diode zener 2020, montée en série et en tête-bêche avec une diode anti-retour 2022.

Une seule diode en anti-parallèle est compatible avec un fonctionnement satisfaisant du système si seules de très faibles variations de tension liées au passage du courant dans les transformateurs déséquilibrent le système, ce qui est souvent le cas. De ce fait, lors des démagnétisations, malgré la diode anti-retour sur Dci, aucun échange de courant n'est possible entre les voies.

Suivant la Figure 19, une configuration 2026 d'isolation d'un transformateur 2004 de module de conversion est une variante des configurations 2002 et 2016 comprenant un circuit d'isolation de magnétisation 2028 différent.

Le circuit d'isolation de magnétisation 2028 est formé à partir de la diode d'isolation de magnétisation 2006 sur laquelle est branchée en parallèle une capacité 2032.

Les applications industrielles concernées par l'invention sont tous types de convertisseurs continu/continu mettant en oeuvre un étage intermédiaire de pont asymétrique à deux interrupteurs électroniques. Un exemple d'application est la distribution de puissance électrique dans un satellite. Est également concerné la réalisation de convertisseurs soumis à un environnement radiatif élevé, dont l'usage d'un faible nombre de composants peu sensibles au rayonnement tels que les diodes et les composants bipolaires est un avantage.

Chaque interrupteur, décrit dans les différentes solutions du pont asymétrique à deux interrupteurs, est compris dans l'ensemble formé par les transistors bipolaires, les transistors de technologie MOS (en anglais Metal Oxide Semiconductor), les transistors de type IGBT (en anglais Insulated Gate Bipolar Transistor), et les thyristors de type GTO (en anglais Gate Turn Off thyristor).

Lorsque le module de conversion est un module post régulateur, le régulateur de sortie de l'une des tensions différentielles de sortie est un régulateur compris dans l'ensemble formé par les régulateurs de type ballast, les régulateurs de type magnétique et les régulateurs à découpage.

Lorsque des régulateurs à découpage sont utilisés, de manière connue deux types de découpage peuvent être mis en oeuvre.

Dans un premier type de découpage, non synchronisé et indépendant, un convertisseur DC/DC à découpage est rajouté sans isolation galvanique après le redresseur monophasé et la cellule de filtrage.

Dans un deuxième type de découpage, synchronisé et dépendant, un redressement contrôlé remplace le redressement à diode simple par la mise en oeuvre d'une fonction combinant diode et interrupteur série.

Lorsque le convertisseur primaire monophasé a une structure de pont asymétrique à plusieurs interrupteurs électroniques commandés en rapport cyclique régulé, divers types de régulation du système peuvent être proposées.

Suivant un premier exemple de régulation dénommée « prérégulation primaire » le générateur de signal de commande 37, destiné à fournir un signal de commande aux interrupteurs, comporte une borne de sortie de commande pour délivrer un signal de commande de sortie, et une borne de réception d'une tension image Vim.

La tension image Vim est représentative de la différence entre la première tension d'alimentation et la deuxième tension d'alimentation.

Le signal de commande fourni par le générateur 37 en sa borne de sortie de commande est un signal séquentiel à impulsions modulées en largeur de type PWM (dénommé en anglais Pulse Width Modulation), la modulation de la largeur δ dépendant de la tension image Vim reçue à la borne de réception.

Suivant un deuxième exemple de régulation dénommée « régulation d'un secondaire sur primaire », le générateur de commande 37 est également un générateur de signal PWM dont la largeur δ modulée dépend de la tension image Vim reçue à la borne de réception.

Dans le deuxième exemple, la tension Vim est représentative d'une tension différentielle fournie entre une première borne de sortie et une deuxième borne de sortie d'un module de conversion destiné à fournir l'énergie électrique la plus grande parmi les énergies électriques de sortie de tous les modules de conversion.

Les fonctions de modulation des premier et deuxième exemples sont de préférence des fonctions linéaires en Vim, d'autres formes de variation étant possibles.

Il est à remarquer que des systèmes de conversion de puissance électrique modulaire continu/continu existent dans lesquels le convertisseur primaire monophasé possède une structure de pont asymétrique à un seul interrupteur. Pour de tels systèmes, chaque transformateur unique et différent, associé à un module de conversion redresseur, possède deux enroulements primaires. L'utilisation de diodes d'isolation de magnétisation et/ou de démagnétisation sur les enroulements primaires est également ici une solution intéressante pour éviter la circulation de courants de magnétisation et/ou de démagnétisation entre les transformateurs.

Toutefois, les systèmes de conversion et de distribution d'énergie électrique modulaire, utilisant un convertisseur primaire ayant une structure de pont asymétrique à deux interrupteurs électriques, sont préférés en raison de la plus grande simplicité de la structure des transformateurs des modules de conversion redresseurs qui ne possèdent chacun qu'un seul enroulement primaire.

## Revendications

1. Système de conversion continu/continu d'énergie électrique modulaire à plusieurs modules, destiné à convertir de l'énergie électrique, fournie par une source d'alimentation (4) en énergie électrique délivrant une première tension différentielle d'entrée continue et un premier courant d'entrée continu, en de l'énergie électrique délivrée en sortie d'au moins deux modules de conversion redresseurs différents,
le système de conversion comprenant
une première borne d'alimentation (6) et une deuxième borne d'alimentation (8), configurées pour être connectées à la source d'alimentation (4) et recevoir respectivement une première tension d'alimentation Vc1 et une deuxième tension d'alimentation Vc2 continues, la première tension d'alimentation Vc1 étant supérieure à la deuxième tension d'alimentation Vc2,
un convertisseur primaire monophasé (10), ayant une structure de pont asymétrique commandée en rapport cyclique fixe ou régulée, comprenant une première branche de pont (20) et une deuxième branche de pont (22), branchées chacune entre la première et la deuxième bornes d'alimentation (6, 8),
la première branche de pont (20) étant formée d'un premier interrupteur électronique (24) commandé par un premier moyen de commande (26), et d'une première diode de roue libre et de démagnétisation (28), la première diode de roue libre (28) étant connectée en série au premier interrupteur électronique (24) en une première borne intermédiaire (30) et à la deuxième borne d'alimentation (8),
la deuxième branche de pont (22) étant formée d'un deuxième interrupteur électronique (32) commandé par un deuxième moyen de commande (33), et d'une deuxième diode de roue libre et de démagnétisation (35), la deuxième diode de roue libre (35) étant connectée au deuxième interrupteur électronique (32) en une deuxième borne intermédiaire (36) et à la première borne d'alimentation (6),
les premier et deuxième moyens de commande (26, 33) étant configurés pour commander par des impulsions répétées périodiquement, en conduction et en même temps, le premier interrupteur (24) et le deuxième interrupteur (32), la tension délivrée Ve1 à la première borne intermédiaire (30) étant supérieure à la tension délivrée Ve2 à la deuxième borne intermédiaire (36) lorsque les premier et deuxième interrupteurs (24, 32) sont en conduction simultanée,
au moins deux modules de conversion redresseurs (12, 14 ; 412, 14 ; 612, 614 ; 712, 714; 1022, 1024), connectés en entrée entre les première et deuxième bornes intermédiaires (30, 36) du convertisseur primaire monophasé (10),
chacun des au moins deux modules de conversion (12, 14; 612, 614; 1022, 1024) comportant
un transformateur différent (40, 42; 1012, 1014) ayant un unique enroulement primaire (50, 52; 1050, 1052) branché entre les première et deuxième bornes intermédiaires (30, 36) du convertisseur primaire monophasé (10), et au moins un enroulement secondaire (56, 58 ; 1056, 1058) de charge utile, et,
associées de manière propre à chaque enroulement secondaire (56, 58 ; 1056, 1058), un redresseur monophasé différent (66, 68 ; 1066, 1068), une cellule de filtrage d'ondulations résiduelles différente (76, 78; 1076, 1078), une paire distincte (86, 88 ; 1086, 1088) de bornes de sortie d'extrémité modulaire, le transformateur (40, 42 ; 1012, 1014), le redresseur monophasé (50, 52 ; 1050, 1052), la cellule de filtrage (76, 78 ; 1076, 1078) étant configurés pour convertir l'énergie électrique fournie en sortie du convertisseur primaire monophasé (10) en de l'énergie électrique délivrée sur la paire de bornes de sortie d'extrémité modulaire, sous une tension différentielle de sortie modulaire prédéterminé pour un courant de charge de sortie modulaire prédéterminé,
**caractérisé en ce que**
chaque enroulement primaire différent et unique (50, 52, 1050, 1052), associé à un module de conversion différent (12, 14 ; 1022, 1024), comprend une première borne (150, 160 ; 1252, 1256) et une deuxième borne (152, 162 ;1254, 1258) d'enroulement primaire, connectées électriquement respectivement à la première borne intermédiaire (30) et à la deuxième borne intermédiaire (36) du convertisseur primaire (10), et
parmi le nombre total N de modules de conversion alimentés par le convertisseur primaire (10), chacun d'au moins le nombre total N moins un des modules de conversion (14 ; 1024) comprend respectivement
une première diode d'isolation de magnétisation (182; 1182) connectée directement ou au travers d'une liaison filaire en série avec l'enroulement primaire associé (52 ; 1052) en l'une de ses première et deuxième bornes (160, 162 ; 1056, 1058) pour former un circuit série branché entre la première borne intermédiaire (30) et la deuxième borne intermédiaire (36), et polarisée dans le sens de conduction vers la deuxième borne intermédiaire (36), et
une deuxième diode d'isolation de démagnétisation (192 ; 1192) connectée, soit sur l'enroulement primaire du transformateur associé, soit sur un enroulement secondaire du transformateur associé pris parmi l'au moins un enroulement de charge utile ou un enroulement secondaire supplémentaire dédié uniquement à la démagnétisation.

2. Système de conversion selon la revendication 1, dans lequel tous les modules de conversion (12, 14) comprennent chacun une première diode d'isolation de magnétisation différente (180, 182) et une deuxième diode d'isolation différente (190, 192).

3. Système de conversion selon la revendication 2, dans lequel le convertisseur primaire monophasé (10) est dépourvu de la deuxième diode de roue libre et de démagnétisation (35) lorsque l'inductance de fuite, présentée par le câblage, ou plus généralement la connectique reliant l'ensemble des transformateurs et le convertisseur primaire, est suffisamment faible pour renvoyer sur les interrupteurs une énergie de démagnétisation compatible des capacités d'absorption et de dissipation de cette énergie par les interrupteurs.

4. Système de conversion selon la revendication 1, dans lequel un unique module de conversion (412 ; 612; 1022) parmi le nombre total N de modules de conversion alimentés par le convertisseur primaire (10) est dépourvu d'une première diode d'isolation de magnétisation et d'une deuxième diode d'isolation de démagnétisation, ledit module de conversion (412 ; 612 ; 1022) étant destiné à supporter la plus grande charge du système de conversion en terme d'énergie électrique consommée.

5. Système de conversion selon l'une quelconque des revendications 1 à 4 dans lequel, lorsqu'une première diode d'isolation de magnétisation (182, 184) est connectée sur l'enroulement primaire d'un transformateur associé, la diode d'isolation de démagnétisation (192, 194) est connectée directement ou au travers d'un fil entre, soit la première borne d'alimentation (6) si la diode d'isolation de magnétisation est connectée à la deuxième borne intermédiaire (36), soit la deuxième borne d'alimentation (8) si la diode d'isolation de magnétisation est connectée à la première borne intermédiaire (30), et la borne de l'enroulement primaire connectée à la diode d'isolation de magnétisation (182 , 184).

6. Système de conversion selon la revendication 5, dans lequel chaque module de conversion (612, 614) comprend respectivement un câble différent (622, 624) de liaison torsadée bifilaire blindée ayant un premier fil (632, 634) et un deuxième fil (642, 644) connectés respectivement à une extrémité différente de l'enroulement primaire (50, 52) du module de conversion (612, 614),
lorsque le module de conversion (612) est dépourvu de diode d'isolation de magnétisation et de diode d'isolation de démagnétisation, les premier et deuxième fils (632, 642) sont connectés directement respectivement à une borne intermédiaire différente (30, 36) du convertisseur primaire (10),
lorsque le module de conversion (614) comprend une première diode d'isolation de magnétisation (182) et une deuxième diode d'isolation de démagnétisation (192),
la première diode d'isolation de magnétisation (182) est connectée à l'une des première et deuxième borne intermédiaires (30, 36) du convertisseur primaire (10) et l'un des fils relie la première diode d'isolation de magnétisation (182) à une extrémité de l'enroulement primaire (52), et
la deuxième diode d'isolation de démagnétisation (192) est connectée, soit à la première borne d'alimentation (6) lorsque la première diode d'isolation de magnétisation (182) est connectée à la deuxième borne intermédiaire (36), soit à la deuxième borne d'alimentation (8) lorsque la première diode d'isolation de magnétisation (182) est connectée à la première borne intermédiaire (30), et l'un des fils relie la deuxième diode d'isolation de démagnétisation (192) à une extrémité de l'enroulement primaire (52),
et chaque borne intermédiaire (30, 36) du convertisseur primaire (10) est connectée, pour chaque module de conversion (612, 614), directement ou au travers d'une première diode d'isolation (182), à un fil différent du câble (622, 624) du module de conversion (612, 614).

7. Système de conversion selon la revendication 5, dans lequel chaque module de conversion (712, 714) comprend respectivement un câble différent (722, 724),
lorsque tous les modules de conversion comportent chacun une première diode de magnétisation et une deuxième diode de démagnétisation, chaque câble est formé par une liaison torsadée trifilaire blindée à trois fils,
lorsqu'un seul (712) des modules de conversion (712, 714) est dépourvu d'une diode d'isolation de démagnétisation et les modules de conversion restants (714) comportent chacun une première diode d'isolation de magnétisation (182) et une deuxième diode d'isolation de démagnétisation (192), un seul câble (722) est formé par une liaison bifilaire blindé et les câbles restants (724) sont formés chacun par une liaison torsadée trifilaire blindée,
chaque câble bifilaire et trifilaire ayant un premier fil et une deuxième fil connectés chacun à une borne intermédiaire différente du convertisseur primaire, et
chaque câble trifilaire ayant une troisième fil connecté directement à la première borne d'alimentation,
les premier et deuxième fils de chaque câble bifilaire ou trifilaire sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du module de conversion et l'autre fil étant connecté directement à l'extrémité restante de l'enroulement primaire lorsque le câble est trifilaire, les premier et deuxième étant connectés chacun à une extrémité différente de l'enroulement primaire du module de conversion lorsque le câble est bifilaire,
le troisième fil de chaque câble trifilaire étant connecté à une deuxième diode de démagnétisation du module de conversion correspondant, la deuxième diode de démagnétisation et le troisième fil étant connectés en série à l'une des bornes de l'enroulement primaire du transformateur correspondant.

8. Système de conversion selon la revendication 5, dans lequel chaque module de conversion (712) comprend respectivement un câble différent,
lorsque tous les modules de conversion comportent chacun une première diode de magnétisation et une deuxième diode de démagnétisation, chaque câble est formé par une liaison quadrifilaire ayant une paire torsadée formée d'un premier fil et d'un deuxième, un troisième fil, un quatrième fil, une capacité de filtrage auxiliaire, une diode auxiliaire d'isolation,
lorsqu'un seul des modules de conversion (712) est dépourvu d'une diode d'isolation de démagnétisation et les modules de conversion restants comportent chacun une première diode d'isolation de magnétisation et une deuxième diode d'isolation de démagnétisation, un seul câble (722) est formé par une liaison bifilaire blindé ayant un premier fil et une deuxième fil, et les câbles restants sont formés chacun par une liaison quadrifilaire du même type que celle utilisée lorsque tous les modules de conversion comportent chacun une première diode de magnétisation et une deuxième diode de démagnétisation,
lorsque le câble est bifilaire, les premier et deuxième fils sont connectés vers le convertisseur primaire à une borne intermédiaire différente et sont connectés chacun à une extrémité différente de l'enroulement primaire du module de conversion,
lorsque le câble est quadrifilaire
le premier fil et le deuxième fil sont connectés chacun vers le convertisseur primaire à une borne intermédiaire différente, et sont connectés respectivement à une première extrémité et à une deuxième extrémité de l'enroulement primaire du module de conversion correspondant, l'un des premier et deuxième fils étant connecté à une extrémité de l'enroulement primaire au travers de la première diode d'isolation de magnétisation du module de conversion et l'autre fil étant connecté directement à l'extrémité restante de l'enroulement primaire,
le troisième fil de chaque câble quadrifilaire est connecté vers le module de conversion à la deuxième diode de démagnétisation, et connecté directement à la première borne d'alimentation,
le quatrième fil est connecté vers le module de conversion directement à la deuxième borne d'alimentation, et est connecté au travers de la diode auxiliaire à l'extrémité de l'enroulement primaire qui est connectée à la première bore intermédiaire,
la capacité auxiliaire est branchée entre les troisième et quatrième fils.

9. Système de conversion selon l'une quelconque des revendications 1 à 4 dans lequel, lorsqu'une deuxième diode d'isolation de démagnétisation (1192) est connectée soit sur un enroulement secondaire du transformateur associé pris parmi l'au moins un enroulement de charge utile ou un enroulement secondaire supplémentaire dédié uniquement à la démagnétisation d'un transformateur associé, la diode d'isolation de démagnétisation (1192) est connectée en série avec un circuit de dissipation et/ou récupération (1202), le circuit de dissipation et/ou récupération (1202) étant compris dans l'ensemble formé par une association en série d'une diode zener et d'une résistance, et une association en parallèle d'une capacité sur un circuit série composé d'une diode zéner et d'une résistance.

10. Système de conversion selon l'une quelconque des revendications 1 à 9, dans lequel chaque interrupteur électronique (24, 32) est compris dans l'ensemble formé par les transistors bipolaires, les transistors de la technologie MOS, les transistor de type IGBT et les thyristors de type GTO.

11. Système de conversion selon l'une quelconque des revendications 1 à 10, dans lequel sur chacune d'une ou plusieurs premières diodes d'isolation de magnétisation est branché en parallèle et en propre un élément d'écrêtage associé, l'élément d'écrêtage étant compris dans l'ensemble formé par une ou plusieurs diodes associés en série dans le même sens et branchées en parallèle de la première diode d'isolation en polarisation inverse, l'association tête bêche en un circuit série d'une diode zener et d'une diode, le circuit série étant branchée en parallèle de la première diode d'isolation, et une capacité.

12. Système de conversion selon l'une quelconque des revendications 1 à 11, dans lequel au moins un module de conversion redresseur (12, 14; 1022, 1024) comprend un régulateur direct de sortie (96, 98 ; 1096, 1098) d'une de ses tensions différentielles de sortie, le régulateur de sortie étant compris dans l'ensemble formé par les régulateurs de type ballast, les régulateurs magnétiques et les régulateurs à découpage.

13. Système de conversion selon l'une quelconque des revendications 1 à 12, dans lequel
le convertisseur primaire monophasé (10) a une structure de pont asymétrique commandée ne rapport cyclique régulée et comprend un générateur de signal de commande (37) destiné à fournir un signal de commande aux interrupteurs,
le générateur de signal de commande (37) comporte une borne de sortie de commande pour délivrer un signal de commande de sortie, et une borne de réception d'une tension image représentative, soit de la différence entre la première tension d'alimentation et la deuxième tension d'alimentation, soit une tension différentielle fournie entre une première borne de sortie et une deuxième borne de sortie d'un module de conversion destiné à fournir l'énergie électrique de sortie la plus grande parmi les énergies électriques de sortie de tous les modules de conversion,
le signal de commande fourni par le générateur (37) en sa borne de sortie de commande est un signal séquentiel à impulsions modulées en largeur, la modulation de la largeur dépendant de la tension image reçue à la borne de réception.

## Patentansprüche

1. Modulares Gleich/Gleich-Strom/Spannung-Umwandlungssystem mit mehreren Modulen, das dazu bestimmt ist, elektrische Energie, die von einer Elektroenergieversorgungsquelle (4) Bereitgestellt wird, die eine erste Differenzeingangsgleichspannung und einen ersten Eingangsgleichstrom ausgibt, in elektrische Energie umzuwandeln, die am Ausgang mindestens zweier unterschiedlicher Gleichrichterumwandlungsmodule ausgegeben wird,
wobei das Umwandlungssystem umfasst:
einen ersten Versorgungsanschluss (6) und einen zweiten Versorgungsanschluss (8), die dazu ausgelegt sind, an die Versorgungsquelle (4) angeschlossen zu werden und jeweils eine erste Versorgungsgleichspannung Vc1 und eine zweite Versorgungsgleichspannung Vc2 zu erhalten, wobei die erste Versorgungsspannung Vc1 höher ist als die zweite Versorgungsspannung Vc2,
einen einphasigen primären Wandler (10) mit einer in festem oder geregeltem zyklischen Verhältnis angesteuerten asymmetrischen Brückenstruktur, die einen ersten Brückenzweig (20) und einen zweiten Brückenzweig (22) umfasst, die jeweils zwischen dem ersten und dem zweiten Versorgungsanschluss (6, 8) angeschlossen sind,
wobei der erste Brückenzweig (20) aus einem ersten elektronischen Schalter (24), der durch ein erstes Steuermittel (26) angesteuert wird, und einer ersten Freilauf- und Entmagnetisierungsdiode (28) besteht, wobei die erste Freilaufdiode (28) mit dem ersten elektronischen Schalter (24) an einem ersten Zwischenanschluss (30) und mit dem zweiten Versorgungsanschluss (8) in Reihe geschaltet ist,
wobei der zweite Brückenzweig (22) aus einem zweiten elektronischen Schalter (32), der durch ein zweites Steuermittel (33) angesteuert wird, und einer zweiten Freilauf- und Entmagnetisierungsdiode (35) besteht, wobei die zweite Freilaufdiode (35) an den zweiten elektronischen Schalter (32) an einem zweiten Zwischenanschluss (36) und an den ersten Versorgungsanschluss (6) angeschlossen ist,
wobei das erste und zweite Steuermittel (26, 33) dazu ausgelegt sind, durch periodisch wiederholte Impulse und zur selben Zeit den ersten Schalter (24) und den zweiten Schalter (32) anzusteuern, wobei die an den ersten Zwischenanschluss (30) ausgegebene Spannung Ve1 höher ist als die an den zweiten Zwischenanschluss (36) ausgegebene Spannung Ve2, wenn sich der erste und zweite Schalter (24, 32) in gleichzeitigem Leitungszustand befinden,
mindestens zwei Gleichrichterumwandlungsmodule (12, 14; 412, 14; 612, 614; 712, 714; 1022, 1024), die am Eingang zwischen dem ersten und zweiten Zwischenanschluss (30, 36) des einphasigen primären Wandlers (10) angeschlossen sind,
wobei jedes der mindestens zwei Umwandlungsmodule (12, 14; 612, 614; 1022, 1024) umfasst
einen anderen Transformator (40, 42; 1012, 1014) mit einer einzigen Primärwicklung (50, 52; 1050, 1052), die zwischen dem ersten und zweiten Zwischenanschluss (30, 36) des einphasigen primären Wandlers (10) angeschlossen ist, und mindestens einer Nutzlast-Sekundärwicklung (56, 58; 1056, 1058), und
jeder Sekundärwicklung (56, 58; 1056, 1058) eigens zugeordnet, einen anderen einphasigen Gleichrichter (66, 68; 1066, 1068), eine andere Restwellenfilterzelle (76, 78; 1076, 1078), ein eigenständiges Paar (86, 88; 1086, 1088) von Modularende-Ausgangsanschlüssen, wobei der Transformator (40, 42; 1012, 1014), der einphasige Gleichrichter (50, 52; 1050, 1052), die Filterzelle (76, 78; 1076, 1078) dazu ausgelegt sind, elektrische Energie, die am Ausgang des einphasigen primären Wandlers (10) bereitgestellt wird, in elektrische Energie, die an dem Paar von Modularende-Ausgangsanschlüssen ausgegeben wird, mit einer vorbestimmten modularen Differenzausgangsspannung für einen vorbestimmten modularen Ausgangsladestrom umzuwandeln,
**dadurch gekennzeichnet, dass**
jede andere und einzige Primärwicklung (50, 52, 1050, 1052), die einem anderen Umwandlungsmodul (12, 14; 1022, 1024) zugeordnet ist, einen ersten Primärwicklungsanschluss (150, 160; 1252, 1256) und einen zweiten Primärwicklungsanschluss (152, 162; 1254, 1258) umfasst, die jeweils elektrisch an den ersten Zwischenanschluss (30) bzw. den zweiten Zwischenanschluss (36) des primären Wandlers (10) angeschlossen sind, und
unter der Gesamtanzahl N von Umwandlungsmodulen, die durch den primären Wandler (10) versorgt werden, jedes zumindest der Gesamtanzahl N minus eines der Umwandlungsmodule (14; 1024) jeweils umfasst:
eine erste Diode (182; 1182) zur Isolierung einer Magnetisierung, die direkt oder über eine Drahtverbindung mit der Primärwicklung (52; 1052) an einem ihrer ersten und zweiten Anschlüsse (160, 162; 1056; 1058) in Reihe angeschlossen ist, um eine Reihenschaltung zu bilden, die zwischen dem ersten Zwischenanschluss (30) und dem zweiten Zwischenanschluss (36) angeschlossen ist und in der Leitungsrichtung zum zweiten Zwischenanschluss (36) hin polarisiert ist, und
eine zweite Diode (192; 1192) zur Isolierung einer Entmagnetisierung, die entweder an die Primärwicklung des zugeordneten Transformators oder an die Sekundärwicklung des zugeordneten Transformators, ausgewählt aus mindestens einer Nutzlastwicklung oder einer zusätzlichen Sekundärwicklung, angeschlossen ist, die einzig zur Entmagnetisierung bestimmt ist.

2. Umwandlungssystem nach Anspruch 1, wobei alle Umwandlungsmodule (12, 14) jeweils eine erste Diode (180, 182) zur Isolierung einer anderen Magnetisierung und eine zweite Diode (190, 192) zur Isolierung für eine andere Isolierung umfassen.

3. Umwandlungssystem nach Anspruch 2, wobei der einphasige primäre Wandler (10) die zweite Freilauf- und Entmagnetisierungsdiode (35) nicht hat, wenn die Streuinduktivität, die durch die Verdrahtung, oder allgemeiner die Anschlusstechnik, die die Einheit aus den Transformatoren und dem primären Wandler verbindet, ausreichend gering ist, um an die Schalter eine Entmagnetisierungsenergie zurückzuleiten, die mit den Absorptionskapazitäten zur und Dissipationskapanzitäten dieser Energie durch die Schalter kompatibel ist.

4. Umwandlungssystem nach Anspruch 1, wobei ein einziges Umwandlungsmodul (412; 612; 1022) unter der Gesamtanzahl N von Umwandlungsmodulen, die vom primären Wandler (10) versorgt werden, keine erste Diode zur Isolierung einer Magnetisierung und keine zweite Diode zur Isolierung einer Entmagnetisierung hat, wobei das Umwandlungsmodul (412; 612; 1022) dazu bestimmt ist, die größte Last des Umwandlungssystems in Bezug auf verbrauchte elektrische Energie zu tragen.

5. Umwandlungssystem nach einem der Ansprüche 1 bis 4, wobei, wenn die erste Diode (182, 184) zur Isolierung einer Magnetisierung an die Primärwicklung eines zugeordneten Transformators angeschlossen ist, die Diode (192, 194) zur Isolierung einer Entmagnetisierung direkt oder über einen Draht zwischen entweder dem ersten Versorgungsanschluss (6), wenn die Diode zur Isolierung einer Magnetisierung an den zweiten Zwischenanschluss (36) angeschlossen ist, oder dem zweiten Versorgungsanschluss (8), wenn die Diode zur Isolierung einer Magnetisierung an den ersten Zwischenanschluss (38) angeschlossen ist, und den Anschluss der an die erste Diode (182, 184) zur Isolierung einer Magnetisierung angeschlossenen Primärwicklung angeschlossen ist.

6. Umwandlungssystem nach Anspruch 5, wobei jedes Umwandlungsmodul (612, 614) jeweils ein anderes verdrilltes, zweiadriges, abgeschirmtes Verbindungskabel (622, 624) mit einer ersten Ader (632, 634) und einer zweiten Ader (642, 644) umfasst, die jeweils an einem anderen Ende der Primärwicklung (50, 52) des Umwandlungsmoduls (612, 614) angeschlossen sind,
wenn das Umwandlungsmodul (612) keine Diode zur Isolierung einer Magnetisierung und keine Diode zur Isolierung einer Entmagnetisierung hat, die erste und zweite Ader (632, 642) jeweils direkt an einen anderen Zwischenanschluss (30, 36) des primären Wandlers (10) angeschlossen sind,
wenn das Umwandlungsmodul (614) eine erste Diode (182) zur Isolierung einer Magnetisierung und eine zweite Diode (192) zur Isolierung einer Entmagnetisierung hat,
die erste Diode (182) zur Isolierung einer Magnetisierung an den ersten oder zweiten Zwischenanschluss (30, 36) des primären Wandlers (10) angeschlossen ist und eine der Adern die erste Diode (182) zur Isolierung einer Magnetisierung mit einem Ende der Primärwicklung (52) verbindet, und
die zweite Diode (192) zur Isolierung einer Entmagnetisierung entweder an den ersten Versorgungsanschluss (6), wenn die erste Diode (182) zur Isolierung einer Magnetisierung an den zweiten Zwischenanschluss (36) angeschlossen ist, oder den zweiten Versorgungsanschluss (8) angeschlossen ist, wenn die erste Diode (182) zur Isolierung einer Magnetisierung an den ersten Zwischenanschluss (30) angeschlossen ist, und eine der Adern die zweite Diode (192) zur Isolierung einer Entmagnetisierung mit einem Ende der Primärwicklung (52) verbindet,
und jeder Zwischenanschluss (30, 36) des primären Wandlers (10) für jedes Umwandlungsmodul (612, 614) direkt oder über eine erste Diode (182) zur Isolierung an eine andere Ader des Kabels (622, 624) des Umwandlungsmoduls (612, 614) angeschlossen ist.

7. System nach Anspruch 5, wobei jedes Umwandlungsmodul (712, 714) jeweils ein anderes Kabel (722, 724) umfasst,
wenn alle Umwandlungsmodule jeweils eine erste Magnetisierungsdiode und eine zweite Entmagnetisierungsdiode umfassen, jedes Kabel durch eine verdrillte, dreiadrige, abgeschirmte Verbindung mit drei Adern gebildet ist,
wenn ein einziges (712) der Umwandlungsmodule (712, 714) keine Diode zur Isolierung einer Entmagnetisierung hat und die restlichen Umwandlungsmodule (714) jeweils eine erste Diode (182) zur Isolierung einer Magnetisierung und eine zweite Diode (192) zur Isolierung einer Entmagnetisierung haben, ein einziges Kabel (722) durch eine zweiadrige abgeschirmte Verbindung gebildet ist und die restlichen Kabel (724) jeweils durch eine verdrillte, dreiadrige, abgeschirmte Verbindung gebildet sind,
wobei jedes zweiadrige und dreiadrige Kabel eine erste Ader und eine zweite Ader hat, die jeweils an einen anderen Zwischenanschluss des primären Wandlers angeschlossen sind, und
wobei jedes dreiadrige Kabel eine dritte Ader hat, die direkt an den ersten Versorgungsanschluss angeschlossen ist,
die erste und zweite Ader jedes zweiadrigen oder dreiadrigen Kabels jeweils an ein erstes Ende bzw. an ein zweites Ende der Primärwicklung des entsprechenden Umwandlungsmoduls angeschlossen sind, wobei eine der ersten und zweiten Adern an ein Ende der Primärwicklung über die ersten Diode zur Isolierung einer Magnetisierung des Umwandlungsmoduls angeschlossen ist, und wobei die andere Ader direkt an das übrige Ende der Primärwicklung angeschlossen ist, wenn das Kabel dreiadrig ist, wobei die erste und zweite jeweils an ein anderes Ende der Primärwicklung des Umwandlungsmoduls angeschlossen sind, wenn das Kabel zweiadrig ist,
wobei die dritte Ader jedes dreiadrigen Kabels an die zweite Diode zur Entmagnetisierung des entsprechenden Umwandlungsmoduls angeschlossen ist, wobei die zweite Diode zur Entmagnetisierung und die dritte Ader in Reihe an einen der Anschlüsse der Primärwicklung des entsprechenden Transformators angeschlossen sind.

8. Umwandlungssystem nach Anspruch 5, wobei jedes Umwandlungsmodul (712) jeweils ein anderes Kabel umfasst,
wenn alle Umwandlungsmodule jeweils eine erste Diode zur Magnetisierung und eine zweite Diode zur Entmagnetisierung umfasst, jedes Kabel durch eine vieradrige Verbindung mit einem verdrillten Paar gebildet ist, das aus einer ersten Ader und einer zweiten, einer dritten Ader, einer vierten Ader, einer zusätzlichen Filterkapazität, einer zusätzlichen Diode zur Isolierung besteht,
wenn ein einziges der Umwandlungsmodule (712) keine Diode zur Isolierung einer Entmagnetisierung hat und die restlichen Umwandlungsmodule jeweils eine erste Diode zur Isolierung einer Magnetisierung und eine zweite Diode zur Isolierung einer Entmagnetisierung haben, ein einziges Kabel (722) durch eine zweiadrige, abgeschirmte Verbindung mit einer ersten Ader und einer zweiten Ader gebildet ist, und die übrigen Kabel jeweils durch eine vieradrige Verbindung desselben Typs gebildet sind wie demjenigen, der verwendet wird, wenn die Umwandlungsmodule jeweils eine erste Diode zur Isolierung einer Magnetisierung und eine zweite Diode zur Isolierung einer Entmagnetisierung haben,
wenn das Kabel zweiadrig ist, die erste und zweite Ader zum primären Wandler hin an einen anderen Zwischenanschluss angeschlossen sind, und jeweils an ein anderes Ende der Primärwicklung des Umwandlungsmoduls angeschlossen sind,
wenn das Kabel vieradrig ist,
die erste Ader und die zweite Ader jeweils zum primären Wandler hin an einen andere Zwischenanschluss angeschlossen sind, und jeweils an ein erstes Ende und an ein zweite Ende der Primärwicklung des entsprechenden Umwandlungsmoduls angeschlossen sind, wobei die erste oder zweite Ader an ein Ende der Primärwicklung über die erste Diode zur Isolierung einer Magnetisierung des Umwandlungsmoduls angeschlossen ist, und die jeweils andere Ader direkt an das übrige Ende der Primärwicklung angeschlossen ist,
die dritte Ader jedes vieradrigen Kabels zum Umwandlungsmodul hin an die zweite Diode zur Entmagnetisierung angeschlossen ist, und direkt an den ersten Versorgungsanschluss angeschlossen ist,
die vierte Ader zum Umwandlungsmodul hin direkt an den zweiten Versorgungsanschluss angeschlossen ist, und über die zusätzliche Diode an das Ende der Primärwicklung angeschlossen ist, das an den ersten Zwischenanschluss angeschlossen ist,
die zusätzliche Kapazität zwischen der dritten und vierten Ader angeschlossen ist.

9. Umwandlungssystem nach einem der Ansprüche 1 bis 4, wobei, wenn eine zweite Diode (1192) zur Isolierung einer Entmagnetisierung entweder an eine Sekundärwicklung des zugeordneten Transformators, ausgewählt aus mindestens einer Nutzlastwicklung oder einer zusätzlichen Sekundärwicklung, angeschlossen ist, die einzig zur Entmagnetisierung eines zugeordneten Transformators bestimmt ist, die Diode (1192) zur Isolierung einer Entmagnetisierung in Reihe mit einer Ableitungs- und/oder Rückgewinnungsschaltung (1202) angeschlossen ist, wobei die Ableitungs- und/oder Rückgewinnungsschaltung (1202) in der Einheit inbegriffen ist, die durch eine Reihenverbindung einer Zener-Diode und eines Widerstands und einer Parallelverbindung einer Kapazität an einer Reihenschaltung gebildet ist, die aus einer Zener-Diode und einem Widerstand besteht.

10. Umwandlungssystem nach einem der Ansprüche 1 bis 9, wobei jeder elektronische Schalter (24, 32) in der Einheit inbegriffen ist, die aus Bipolartransistoren, Transistoren der MOS-Technologie, Transistoren des Typs IGBT und Thyristoren des Typs GTO besteht.

11. Umwandlungssystem nach einem der Ansprüche 1 bis 10, wobei an jeweils eine oder mehrere erste Dioden zur Isolierung einer Magnetisierung parallel und eigens ein zugeordnetes Spitzenwertbegrenzungselement angeschlossen ist, wobei das Spitzenwertbegrenzungselement in der Einheit inbegriffen ist, die aus einer oder mehreren Dioden besteht, die in Reihe in derselben Richtung verbunden und parallel mit der ersten Diode zur Isolierung in umgekehrter Polarisation, in Antiparallelverbindung in einer Reihenschaltung aus einer Zener-Diode und eine Diode angeschlossen ist, wobei die Reihenschaltung mit der ersten Diode zur Isolierung und einer Kapazität parallel geschaltet ist.

12. Umwandlungssystem nach einem der Ansprüche 1 bis 11, wobei mindestens ein Gleichrichterumwandlungsmodul (12, 14; 1022, 1024) einen Ausgangsdirektregler (96, 98; 1096, 1098) für eine seiner Ausgangsdifferenzspannungen umfasst, wobei der Ausgangsregler in der Gruppe inbegriffen ist, die aus Reglern des Typs Vorschaltgerät, Magnetreglern und Schaltreglern besteht.

13. Umwandlungssystem nach einem der Ansprüche 1 bis 12, wobei
der einphasige primäre Wandler (10) eine asymmetrische Brückenstruktur hat, die in geregeltem zyklischen Verhältnis angesteuert wird, und einen Steuerbefehlgenerator (37) umfasst, der dazu bestimmt ist, den Schaltern einen Steuerbefehl bereitzustellen,
wobei der Steuerbefehlgenerator (37) einen Steuerausgangsanschluss zur Ausgabe eines Ausgangssteuersignals und einen Empfangsanschluss für eine Abbildungsspannung umfasst, die repräsentativ für die Differenz zwischen der ersten Versorgungsspannung und der zweiten Versorgungsspannung oder eine Differenzspannung ist, die zwischen einem ersten Ausgangsanschluss und einem zweiten Ausgangsanschluss eines Umwandlungsmoduls bereitgestellt wird, das dazu bestimmt ist, die größte elektrische Ausgangsenergie unter den elektrischen Ausgangsenergien aller Umwandlungsmodule bereitzustellen,
wobei das durch den Generator (37) an seinem Steuerausgangsanschluss bereitgestellte Steuersignal ein pulsbreitenmoduliertes sequentielles Signal ist, wobei die Modulation der Breite von der am Empfangsanschluss eingegangenen Abbildungsspannung abhängt.

## Claims

1. Modular DC/DC electrical-energy conversion system with a plurality of modules, intended to convert electrical energy supplied by an electrical-energy supply source (4) delivering a first differential DC input voltage and a first DC input current, into electrical energy delivered as an output from at least two different rectifying conversion modules,
the conversion system comprising
a first supply terminal (6) and a second supply terminal (8), configured so as to be connected to the supply source (4) and to receive respectively a first supply voltage Vc1 and a second supply voltage Vc2, both DC, the first supply voltage Vc1 being higher than the second supply voltage Vc2,
a single-phase primary converter (10) having an asymmetric bridge structure controlled for fixed or regulated duty factor, comprising a first bridge arm (20) and a second bridge arm (22), each connected between the first and second supply terminals (6, 8),
the first bridge arm (20) being formed by a first electronic switch (24) controlled by a first control means (26), and a first freewheeling and demagnetisation diode (28), the first freewheeling diode (28) being connected in series to the first electronic switch (24) in a first intermediate terminal (30) and to the second supply terminal (8),
the second bridge arm (22) being formed by a second electronic switch (32) controlled by a second control means (33), and a second freewheeling and demagnetisation diode (35), the second freewheeling diode (35) being connected to the second electronic switch (32) in a second intermediate terminal (36) and to the first supply terminal (6),
the first and second control means (26, 33) being configured so as to control, by pulses repeated periodically, in conduction and at the same time, the first switch (24) and the second switch (32), the voltage Ve1 delivered to the first intermediate terminal (30) being higher than the voltage Ve2 delivered to the second intermediate terminal (36) when the first and second switches (24, 32) are in simultaneous conduction,
at least two rectifying conversion modules (12, 14; 412, 14; 612, 614; 712, 714; 1022, 1024), connected as an input between the first and second intermediate terminals (30, 36) of the single-phase primary converter (10),
each of the at least two conversion modules (12, 14; 612, 614; 1022, 1024) comprising
a different transformer (40, 42; 1012, 1014) having a single primary winding (50, 52; 1050, 1052) connected between the first and second intermediate terminals (30, 36) of the single-phase primary converter (10), and at least one useful-load secondary winding (56, 58; 1056, 1058), and
associated uniquely with each secondary winding (56, 58; 1056, 1058), a different single-phase rectifier (66, 68; 1066, 1068), a cell for filtering different residual ripples (76, 78; 1076, 1078), a separate pair (86, 88; 1086, 1088) of modular end output terminals, the transformer (40, 42; 1012, 1014), the single-phase rectifier (50, 52; 1050, 1052) and the filtering cell (76, 78; 1076, 1078) being configured so as to convert the electrical energy supplied as an output from the single-phase primary converter (10) into electrical energy delivered to the pair of modular end output terminals, at a predetermined modular differential output voltage for a predetermined modular output load current,
**characterised in that**
each different and unique primary winding (50, 52; 1050, 1052), associated with a different conversion module (12, 14; 1022, 1024), comprises a first primary-winding terminal (150, 160; 1252, 1256) and a second primary-winding terminal (152, 162; 1254, 1258), electrically connected respectively to the first intermediate terminal (30) and to the second intermediate terminal (36) of the primary converter (10), and
among the total number N of conversion modules supplied by the primary converter (10), each of at least the total number N minus one of the conversion modules (14; 1024) comprises respectively
a first magnetisation isolation diode (182; 1182) connected directly or through a wire connection in series with the associated primary winding (52; 1052) at one of its first and second terminals (160, 162; 1056, 1058) in order to form a series circuit connected between the first intermediate terminal (30) and the second intermediate terminal (36), and biased in the direction of conduction towards the second intermediate terminal (36), and
a second demagnetisation isolation diode (192; 1192) connected either to the primary winding of the associated transformer or to a secondary winding of the associated transformer taken from the at least one useful-load winding or a supplementary secondary winding dedicated solely to demagnetisation.

2. Conversion system according to claim 1, in which all the conversion modules (12, 14) each comprise a first different magnetisation isolation diode (180, 182) and a second different isolation diode (190, 192).

3. Conversion system according to claim 2, in which the single-phase primary converter (10) does not have the second freewheeling and demagnetisation diode (35) when the leakage inductance presented by the wiring, or generally the connections connecting all the transformers and the primary converter, is sufficiently low to return on the switches a demagnetisation energy compatible with the capacities for absorption and dissipation of this energy by the switches.

4. Conversion system according to claim 1, in which a single conversion module (412; 612; 1022) among a total number N of conversion modules supplied by the primary converter (10) does not have a first magnetisation isolation diode and a second demagnetisation isolation diode, said conversion module (412; 612; 1022) being intended to support the greatest load of the conversion system in terms of electrical energy consumed.

5. Conversion system according any of claims 1 to 4, in which, when a first magnetisation isolation diode (182, 184) is connected to the primary winding of an associated transformer, the demagnetisation isolation diode (192, 194) is connected directly or through a wire between, either the first supply terminal (6) if the magnetisation isolation diode is connected to the second intermediate terminal (36), or the second supply terminal (8) if the magnetisation isolation diode is connected to the first intermediate terminal (30), and the terminal of the primary winding connected to the magnetisation isolation diode (182, 184).

6. Conversion system according to claim 5, in which each conversion module (612, 614) comprises respectively a different shielded bifilar twisted connecting cable (622, 624) having a first wire (632, 634) and a second wire (642, 644) connected respectively to a different end of the primary winding (50, 52) of the conversion module (612, 614).
when the conversion module (612) has no magnetisation isolation diode and demagnetisation isolation diode, the first and second wires (632, 642) are directly connected respectively to a different intermediate terminal (30, 36) of the primary converter (10),
when the conversion module (614) comprises a first magnetisation isolation diode (182) and a second demagnetisation isolation diode (192),
the first magnetisation isolation diode (182) is connected to one of the first and second intermediate terminals (30, 36) of the primary converter (10) and one of the wires connects the first magnetisation isolation diode (182) to one end of the primary winding (52), and
the second demagnetisation isolation diode (192) is connected either to the first supply terminal (6) when the first magnetisation isolation diode (182) is connected to the second intermediate terminal (36), or to the second supply terminal (8) when the first magnetisation isolation diode (182) is connected to the first intermediate terminal (30), and one of the wires connects the second demagnetisation isolation diode (192) to one end of the primary winding (52),
and each intermediate terminal (30, 36) of the primary converter (10) is connected, for each conversion module (612, 614), directly or through a first isolation diode (182), to a different wire of the cable (622, 624) of the conversion module (612, 614).

7. Conversion system according to claim 5, in which each conversion module (712, 714) comprises respectively a different cable (722, 724),
when all the conversion modules each comprise a first magnetisation diode and a second demagnetisation diode, each cable is formed by a shielded trifilar twisted connection,
when only one (712) of the conversion modules (712, 714) has no demagnetisation isolation diode and the remaining conversion modules (714) each comprise a first magnetisation isolation diode (182) and a second demagnetisation isolation diode (192), only one cable (722) is formed by a shielded bifilar connection and the remaining cables (724) are each formed by a shielded trifilar twisted connection,
each bifilar and trifilar cable having a first wire and a second wire each connected to a different intermediate terminal of the primary converter, and
each trifilar cable having a third wire connected directly to the first supply terminal,
the first and second wires of each bifilar or trifilar cable are connected respectively to a first end and to a second end of the primary winding of the corresponding conversion module, one of the first and second wires being connected to one end of the primary winding through the first magnetisation isolation diode of the conversion module and the other wire being connected directly to the remaining end of the primary winding when the cable is trifilar, the first and second each being connected to a different end of the primary winding of the conversion module when the cable is bifilar,
the third wire of each trifilar cable being connected to a second demagnetisation diode of the corresponding conversion module, the second demagnetisation diode and the third wire being connected in series to one of the terminals of the primary winding of the corresponding transformer.

8. Conversion system according to claim 5, in which each conversion module (712) comprises respectively a different cable,
when all the conversion modules each comprise a first magnetisation diode and a second demagnetisation diode, each cable is formed by a quadrifilar connection having a twisted pair formed by a first wire and a second, a third wire, a fourth wire, an auxiliary filtering capacitor, an auxiliary isolation diode,
when only one of the conversion modules (712) has no demagnetisation isolation diode and the remaining conversion modules each comprise a first magnetisation isolation diode and a second demagnetisation isolation diode, only one cable (722) is formed by a shielded bifilar connection having a first wire and a second wire, and the remaining cables are each formed by a quadrifilar connection of the same type as that used when all the conversion modules each comprise a first magnetisation diode and a second demagnetisation diode,
when the cable is bifilar, the first and second wires are connected to the primary converter at a different intermediate terminal and are each connected to a different end of the primary winding of the conversion module,
when the cable is quadrifilar
the first wire and the second wire are each connected to the primary converter at a different intermediate terminal, and are connected respectively to a first end and to a second end of the primary winding of the corresponding conversion module, one of the first and second wires being connected to one end of the primary winding through the first magnetisation isolation diode of the conversion module and the other wire being connected directly to the remaining end of the primary winding,
the third wire of each quadrifilar cable is connected to the conversion module at the second demagnetisation diode, and connected directly to the first supply terminal,
the fourth wire is connected to the conversion module directly at the second supply terminal, and is connected through the auxiliary diode to the end of the primary winding that is connected to the first intermediate terminal,
the auxiliary capacitor is connected between the third and fourth wires.

9. Conversion system according to any of claims 1 to 4, in which, when a second demagnetisation isolation diode (1192) is connected either to a secondary winding of the associated transformer taken from the at least one useful-load winding or a supplementary secondary winding dedicated solely to the demagnetisation of an associated transformer, the demagnetisation isolation diode (1192) is connected in series with a dissipation and/or recovery circuit (1202), the dissipation and/or recovery circuit (1202) being included in the assembly formed by an association in series of a Zener diode and a resistor, and an association in parallel of a capacitor on a series circuit composed of a Zener diode and a resistor.

10. Conversion system according to any of claims 1 to 9, in which each electronic switch (24, 32) is included in the assembly formed by twin-pole transistors, MOS-technology transistors, IGBT-type transistors and GTO-type thyristors.

11. Conversion system according any of claims 1 to 10, in which, to each of one or more first magnetisation isolation diodes, an associated clipping element is connected in parallel and uniquely, the clipping element being included in the assembly formed by one or more diodes associated in series in the same direction and connected in parallel to the first isolation diode in reverse biasing, the association of a Zener diode and a diode in opposite orientations in a series circuit, the series circuit being connected in parallel to the first isolation diode, and a capacitor.

12. Conversion system according any of claims 1 to 11, in which at least one rectifying conversion module (12, 14; 1022, 1024) comprises an output forward regulator (96, 98; 1096, 1098) for regulating the output of one of its differential output voltages, the output regulator being included in the assembly formed by ballast-type regulators, magnetic regulators and chopping regulators.

13. Conversion system according any of claims 1 to 12, in which
the single-phase primary converter (10) has an asymmetric bridge structure controlled for regulated duty factor and comprises a control signal generator (37) intended to supply a control signal to the switches,
the control signal generator (37) comprises a control output terminal for delivering an output control signal, and a terminal for receiving an image voltage representing either the difference between the first supply voltage and the second supply voltage, or a differential voltage supplied between a first output terminal and a second output terminal of a conversion module intended to supply the highest output electrical energy from among the output electrical energies of all the conversion modules, and
the control signal supplied by the generator (37) at its control output terminal is a pulse width modulated sequential signal, the modulation of the width being dependent on the image voltage received at the reception terminal.
